(19) Europäisches Patentamt
European Patent Office
Office européen des brevets

(11) **EP 2 467 828 B1**

(12) **EUROPÄISCHE PATENTSCHRIFT**

(45) Veröffentlichungstag und Bekanntmachung des Hinweises auf die Patenterteilung:
**18.02.2015   Patentblatt 2015/08**

(21) Anmeldenummer: **10774122.5**

(22) Anmeldetag: **22.08.2010**

(51) Int Cl.:
*G06T 7/20* (2006.01)          *G06T 7/00* (2006.01)
*G06K 9/00* (2006.01)

(86) Internationale Anmeldenummer:
**PCT/EP2010/005149**

(87) Internationale Veröffentlichungsnummer:
**WO 2011/023348 (03.03.2011 Gazette 2011/09)**

(54) **VERFAHREN UND SYSTEM ZUR AUTOMATISCHEN OBJEKTERKENNUNG UND ANSCHLIESSENDEN OBJEKTVERFOLGUNG NACH MASSGABE DER OBJEKTFORM**

METHOD AND SYSTEM FOR AUTOMATIC OBJECT DETECTION AND SUBSEQUENT OBJECT TRACKING IN ACCORDANCE WITH THE OBJECT SHAPE

PROCÉDÉ ET SYSTÈME DE RECONNAISSANCE AUTOMATIQUE D'OBJETS ET DE SUIVI SUBSÉQUENT DE L'OBJET EN FONCTION DE SA FORME

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.08.2009   DE 102009038364**

(43) Veröffentlichungstag der Anmeldung:
**27.06.2012   Patentblatt 2012/26**

(73) Patentinhaber: **iAd Gesellschaft für Informatik, Automatisierung und Datenverarbeitung mbH
90613 Grosshabersdorf (DE)**

(72) Erfinder:
• **HAMPEL, Hermann
  90613 Großhabersdorf (DE)**
• **BEROLD, Ulrich
  90427 Nürnberg (DE)**
• **QUAST, Katharina
  91054 Erlangen (DE)**
• **KAUP, André
  91090 Effeltrich (DE)**

(74) Vertreter: **Dreykorn-Lindner, Werner
Patentanwalt
Steinlachstrasse 2
90571 Schwaig (DE)**

(56) Entgegenhaltungen:
• **WEILUN LAO ET AL: "Automatic video-based human motion analyzer for consumer surveillance system", IEEE TRANSACTIONS ON CONSUMER ELECTRONICS, IEEE SERVICE CENTER, NEW YORK, NY, US, Bd. 52, Nr. 2, 1. Mai 2009 (2009-05-01), Seiten 591-598, XP011270911, ISSN: 0098-3063**
• **XIAOPING CHEN ET AL: "An improved mean shift algorithm for moving object tracking", INTELLIGENT CONTROL AND AUTOMATION, 2008. WCICA 2008. 7TH WORLD CONGRESS ON, IEEE, PISCATAWAY, NJ, USA, 25. Juni 2008 (2008-06-25), Seiten 5111-5114, XP031301725, ISBN: 978-1-4244-2113-8**
• **JIAN-GANG WANG ET AL: "Face obscuration in a video sequence by integrating kernel-based mean-shift and active contour", CONTROL, AUTOMATION, ROBOTICS AND VISION, 2008. ICARCV 2008. 10TH INTERNATIONAL CONFERENCE ON, IEEE, PISCATAWAY, NJ, USA, 17. Dezember 2008 (2008-12-17), Seiten 2314-2318, XP031433962, ISBN: 978-1-4244-2286-9**

## Beschreibung

Die Erfindung betrifft, gemäß Patentanspruch 1 ein Verfahren zur automatischen Objekterkennung und anschließenden Objektverfolgung nach Maßgabe der Objektform. Weiterhin betrifft die Erfindung, gemäß Patentanspruch 9, ein System hierfür.

Das automatische Erkennen und Verfolgen sich bewegender Objekte ist nicht nur in der Videoüberwachung, sondern auch in vielen anderen Bereichen der Videotechnik und Bildverarbeitung von zentraler Bedeutung. Für die Objektverfolgung existiert eine große Anzahl an so genannten Trackingverfahren, die sich aber in der Regel auf die Bestimmung der aktuellen Objektposition beschränken. Neben der aktuellen Objektposition ist für viele Anwendungen jedoch auch die Kontur bzw. die Orientierung des Objekts im Raum von Interesse.

Es existiert eine Vielzahl von Trackingverfahren zur Objektverfolgung. Zu den bekanntesten und weit verbreiteten Verfahren zählen Kalman-Filter-Tracking, Mean-Shift-Tracking und Partikel-Filter-Tracking, sowie deren Erweiterungen und Abwandlungen. Beispielsweise beschreibt die US 6,590,999 B1 eine Verfahren und eine Einrichtung zur Objektverfolgung gemäß Mean-Shift-Tracking Mean-Shift-Tracking in Echtzeit für ein in der Objektform veränderbares Ziel, beispielsweise Menschen. Die Objektverfolgung basiert auf visuell erkennbaren Merkmalen, beispielsweise Farbe oder Strukturen, wobei die statistische Verteilung dieser Merkmale das Ziel charakterisiert. In einem ersten Abschnitt wird der Grad der Ähnlichkeit zwischen einem vorgegebenen Ziel und einem Vergleichsziel berechnet und in einem nachfolgenden Abschnitt der Grad selbst berechnet, ausgedrückt durch eine Metrik, welche vom Bhattacharyya Koeffizienten abgeleitet ist. Ein aus dem Maximalwert des Bhattacharyya Koeffizienten abgeleiteter Gradienten-Vektor wird dann benutzt um den wahrscheinlichsten Ort des Vergleichsziels in den nachfolgenden Abschnitten zu bestimmen.

Die traditionellen Verfahren sind alle in der Lage die Objektposition einigermaßen robust zu bestimmen und können teilweise auch die Größe ermitteln. Eine Bestimmung der eigentlichen Objektform bzw. der Orientierung des Objekts ist jedoch mittels der traditionellen Verfahren nicht möglich.

Erst durch Erweiterungen und Verbesserungen der ursprünglichen Verfahren, ist auch eine Verfolgung der Objektform möglich. Vor allem das Partikel-Filter- als auch das Mean-Shift-Verfahren wurden in diese Richtung hin weiter entwickelt. In dem Konferenzbeitrag " Particle filtering for geometric active contours with application to tracking moving and deforming objects" von Rathi, Y. and Vaswani, N. and Tannenbaum, A. and Yezzi, A. in IEEE Computer Society Conference on Computer Vision and Pattern Recognition, 2, 2005 ist eine solche Partikel-Filter-Variante beschrieben. Obwohl die Objektform recht gut verfolgt werden kann, hat dieser Ansatz jedoch auch einige Nachteile.

So müssen beispielsweise einige Informationen über die Objektform dem Algorithmus bereit gestellt werden, damit auch bei größeren Verdeckungen des Objekts dessen Form noch beschrieben werden kann. Dies wiederum führt aber dazu, dass bei sehr großen Formänderungen die Form nicht mehr sehr präzise verfolgt werden kann.

Im Falle, dass das Objekt über längere Zeit vollständig verdeckt ist, lässt die Leistungsfähigkeit des Verfahrens außerdem extrem nach.

Eine Weiterentwicklung des Mean-Shift-Verfahrens zur Verfolgung der Objektform wurde in dem Konferenzbeitrag "Object Tracking by Asymmetrie Kernel Mean Shift with Automatic Scale and Orientation Selection" von A. Yilmaz in Proc. IEEE Conference on Computer Vision and Pattern Recognition, June 2007, pp. 1--6 vorgestellt. Anstatt eines symmetrischen Filterkerns wird ein durch Level-Set-Funktionen bestimmter Filterkern eingesetzt, der der Objektform angepasst ist. Des Weiteren wird der Suchraum um eine Skalierungs- und eine Orientierungsdimension erweitert. Dadurch können neben der Objektposition auch die Größe und die Orientierung des Objekts bzw. dessen Kontur bestimmt werden. Da aber die Orientierung nur innerhalb der Bildebene und damit nur 2D berechnet wird, kann die Objektform nicht an die tatsächliche Bewegung des Objekts im dreidimensionalen Raum angepasst werden.

In "Automatic Video-Based Human Motion Analyzer for Consumer Surveillance System" von W. Lao et al., in IEEE Transactions on Consumer Electronics, Vol. 55, No. 2, May 2009, pp. 591 - 598, wird eine Personendetektion mit einem Gaussian Mixture Model zur Hintergrundsubtraktion und Schattenentfernung vorgestellt. Zum Tracking von Personen wird ein Mean-Shift Algorithmus verwendet.

Im Konferenzbeitrag "An Improved Mean Shift Algorithm for Moving Object Tracking" von X. Chen et al., Proc. 7th World Congress on Intelligent Control and Automation, June 2008, pp. 5111 - 5114, wird ein verbesserter Mean-Shift Algorithmus mit asymmetrischem Filterkern vorgestellt.

Ein ebenfalls recht überzeugender Trackingalgorithmus, der sich nicht einem der drei genannten Grundverfahren zuordnen lässt, basiert auf dem so genannten Machine-Learning-Ansatz. Für die Berechnung der Objektform werden sowohl Hidden Markov Modelle als auch geometrische Objekteigenschaften berücksichtigt. Da das Verfahren die Konturpunkte des Objekts über eine Klassifizierung bestimmt, muss das Verfahren zunächst mittels eines Trainingssets auf die Klassifizierer (bestimmte Merkmale) trainiert werden. Dazu muss selbstverständlich erst einmal eine Trainingsmenge vorhanden sein bzw. erzeugt werden. Da außerdem jeder einzelne Pixel bei der Klassifizierung betrachtet wird, ist eine besonders große Menge an Merkmalen und damit ein relativ großes Trainingsset erforderlich.

Allgemein gilt außerdem für die meisten Trackingverfahren, dass sie zu verfolgende Objekte nicht automatisch erkennen können. Viele Trackingalgorithmen sind also entweder auf Nutzereingaben oder auf Ergebnisse einer vorher durchgeführten Objekterkennung angewiesen. In der Regel besteht ein System zur Objektverfolgung daher aus einer Komponente zur Objekterkennung und dem eigentlichen Trackingalgorithmus.

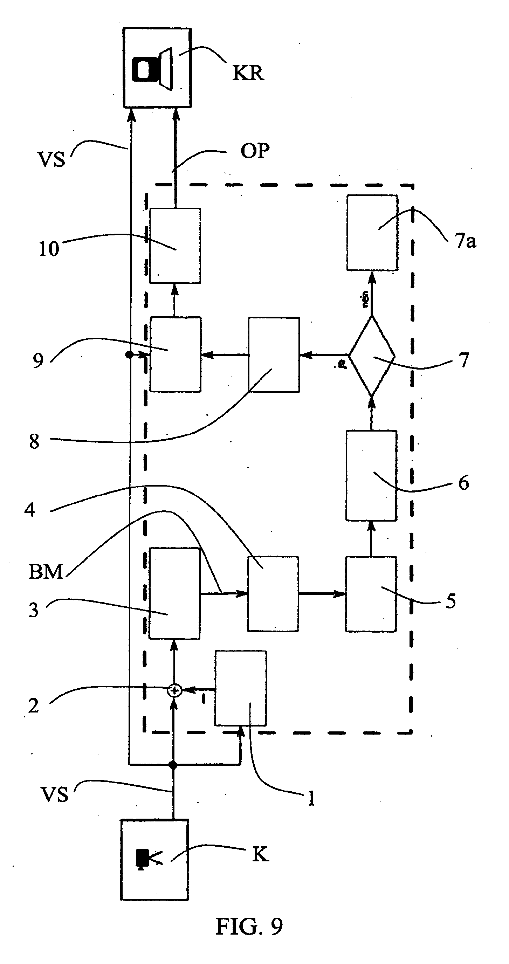

In FIG. 9 ist der schematische Ablauf einer automatisierten Objektverfolgung eines solches System nach dem Stand der Technik, bestehend aus einer Objekterkennung auf Basis der Gaussian Mixture Models und dem Mean-Shift-Tracking dargestellt.

Adaptive Gaussian Mixture Models sind ein weitverbreitetes HintergrundSubtraktionsverfahren. Wie in C. Stauffer and W. E. L. Grimson, "Adaptive background mixture models for real-time tracking," in Proc. IEEE Computer Society Conference on Computer Vision and Pattern Recognition, vol. 2, 1999 vorgeschlagen, kann jeder Pixel einer Szene durch eine Mischung bestehend aus $K$ verschiedenen Gaußfunktionen modelliert werden. Die Modellbildung basiert auf der Schätzung der Wahrscheinlichkeitsdichte der Farbwerte jedes Bildpunkts. Es wird angenommen, dass der Farbwert eines Pixels durch die Oberfläche des Objekts bestimmt wird, das auf den betrachteten Pixel abgebildet wird. Im Falle einer idealen und statischen Szene ohne Rauschen kann die Wahrscheinlichkeitsdichte eines Farbwerts eines Pixels durch eine Diracimpulsfunktion beschrieben werden. Aufgrund von Kamerarauschen und leichten Beleuchtungsveränderungen ändert sich jedoch in einer realen, statischen Szene der Farbwert eines Pixels über die Zeit.

In nicht stationären Szenen kann außerdem beobachtet werden, dass bis zu $K$ verschiedene Objekte $k = 1...K$ auf einen Bildpunkt abgebildet werden können. Deshalb wird für monochromatische Videosequenzen die Wahrscheinlichkeitsdichte eines Pixelfarbwerts X, verursacht durch ein Objekt k, durch die folgende Gaußfunktion mit Mittelwert $\mu_k$ und Standardabweichung $\sigma_k$ modelliert:

$$\eta(X, \mu_k, \sigma_k) = \frac{1}{\sqrt{2\pi}\sigma_k} e^{-\frac{1}{2}\left(\frac{X-\mu_k}{\sigma_k}\right)^2} \qquad (1)$$

$$\eta(X, \mu_k, \Sigma_k) = \frac{1}{(2\pi)^{\frac{n}{2}}|\Sigma_k|^{\frac{1}{2}}} e^{-\frac{1}{2}(X-\mu_k)\Sigma_k^{-1}(X-\mu_k)} \qquad (2)$$

wobei $\Sigma$ eine n-mal-n große Kovarianzmatrix der Form $\Sigma_k = \sigma_k^2 I$ ist, da angenommen wird, dass die RGB-Farbkanäle unabhängig voneinander sind und dieselbe Standardabweichung besitzen. Diese Annahme entspricht zwar nicht den Tatsachen, vermeidet aber eine sehr rechenintensive Matrizeninvertierung.

Die Wahrscheinlichkeit, dass ein Pixel x im Bild $t$ den Farbwert $X$ besitzt, entspricht der gewichteten Mischung der Wahrscheinlichkeitsdichtefunktionen der $k = 1...K$ Objekte, die auf den betrachteten Pixel abgebildet werden können:

$$P(X_{t)} = \sum_{k=1}^{K} \omega_{k,t} \cdot \eta(X_t, \mu_{k,t}, \Sigma_{k,t}) \qquad (3)$$

mit Gewichtungsfaktor $\omega_k$. In der Praxis wird $K$ oft auf Werte zwischen 3 und 5 beschränkt.

Der GMM-Algorithmus lässt sich nun in zwei Schritte unterteilen. Zunächst muss für jedes neue Bild der Videosequenz das bereits existierende Modell aktualisiert werden. Anhand des Modells wird dann ein aktuelles Bild des Hintergrunds gebildet, anschließend kann das aktuelle Bild in Vorder- und Hintergrund eingeteilt werden. Zur Aktualisierung des Modells wird überprüft, ob der aktuelle Farbwert einer der $K$ vorhandenen Gaußfunktionen zugeordnet werden kann. Ein Pixel wird einer Gaußfunktion $k$ zugeordnet, wenn gilt:

$$\| X_t - \mu_{k,t-1} \| < d \cdot \sigma_{k,t-1} \qquad (4)$$

wobei $d$ ein vom Nutzer definierter Parameter ist. Es werden also alle Farbwerte, die weniger als $d \cdot \sigma_{k,t-1}$ vom Mittelwert abweichen, der $k$-ten Gaußfunktion zugeordnet. Andererseits kann man die Bedingung auch so interpretieren, dass alle Farbwerte der Gaußfunktion zugeordnet werden, die innerhalb der Fläche liegen, die der Wahrscheinlichkeit $p_0$ entspricht:

$$\int_{\mu_{k,t-1}-d\cdot\sigma_{k,t-1}}^{\mu_{k,t-1}+d\cdot\sigma_{k,t-1}} \eta\big(X_t, \mu_{k,t-1}, \Sigma_{k,t-1}\big)dX_t = p_0 \tag{5}$$

Wenn X einer Verteilung zugeordnet werden kann, werden die Modellparameter wie folgt angepasst:

$$\omega_{k,t} = (1-\alpha)\omega_{k,t-1} + \alpha \tag{6}$$

$$\mu_{k,t} = \big(1-\rho_{k,t}\big)\mu_{k,t-1} + \rho_{k,t}X_t \tag{7}$$

$$\sigma_{k,t} = \sqrt{(1-\rho_{k,t})\sigma_{k,t-1}^2 + \rho_{k,t}(\parallel X_t - \mu_{k,t}\parallel)^2} \tag{8}$$

wobei $\rho_{k,t} = \alpha / \omega_{k,t}$ nach P. W. Power and J. A. Schoonees, "Understanding background mixture models for foreground segmentation," in Proc. Image and Vision Computing, 2002, pp. 267-271. Für die übrigen Verteilungen, denen X nicht zugeordnet werden kann, wird nur der Wert für $\omega_{k,t}$ entsprechend Gl. (9) berechnet:

$$\omega_{k,t} = (1-\alpha)\omega_{k,t-1} \tag{9}$$

Dabei bleiben die anderen Parameter unverändert.

Die Gaußfunktionen werden nach einem Zuverlässigkeitsmaß $\omega_{k,t} / \sigma_{k,t}$ so sortiert, dass mit zunehmenden Index $k$ die Zuverlässigkeit abnimmt. Kann ein Pixel mehr als einer Gaußverteilung zugeordnet werden, wird er derjenigen mit der höchsten Zuverlässigkeit zugeordnet. Falls die Bedingung in Gl. (4) nicht zutrifft und ein Farbwert keiner der Gaußverteilungen zugeordnet werden kann, wird die am wenigsten zuverlässige Gaußfunktion durch eine neue Gaußverteilung mit dem aktuellen Bildpunkt als Mittelwert ersetzt. Diese neue Gaußfunktion wird mit kleiner Auftrittswahrscheinlichkeit und großer Standardabweichung initialisiert. Anschließend werden alle $\omega_{k,t}$ skaliert. Ein Farbwert wird mit höherer Wahrscheinlichkeit (lower $k$) als Hintergrund betrachtet, wenn er häufiger auftaucht (high $\omega_k$) und sich nicht viel ändert (low $\omega_k$). Um die $B$ Verteilungen zu bestimmen, die den Hintergrund modellieren, wird ein vom Nutzer definierte vorherige Wahrscheinlichkeit $T$ als Schwellwert genutzt:

$$B = \underset{b}{\operatorname{argmin}}\big(\sum_{k=1}^{b} \omega_k > T\big) \tag{10}$$

Die übrigen $K - B$ Verteilungen bilden den Vordergrund.

Der GMM-Algorithmus zur Objekterkennung (siehe 1) bildet zunächst ein Modell des aktuellen Hintergrunds. Durch Subtraktion (siehe 2) des aktuellen Hintergrundmodells vom aktuellen Frame, werden sich verändernde Bildbereiche erkannt. Anschließend wird aus der Differenz zwischen Hintergrund und aktuellem Bild mittels Schwellwertbildung (siehe 3) eine Binärmaske BM bestimmt, die die bewegten Bildbereiche enthält. Durch einfache morphologische Operationen (siehe 4) sollen kleine, häufig durch Rauschen verursachte Fehldetektionen entfernt und die Binärmaske BM so verfeinert werden. Um zusammenhängende Objektbereiche zu bestimmen, wird die Binärmaske anschließend einer so genannten Connected Component Analyse (siehe 5) unterzogen.

Kommen erkannte Bereiche in mehreren aufeinander folgenden Bildern vor, werden sie als zuverlässig erkanntes Objekt eingestuft (siehe 6). Über einen einfachen Vergleich von erkannten Objekten und schon bereits verfolgten Objekten, werden neu erkannte Objekte bestimmt (siehe 7 bzw. 7a: keine neue Objektverfolgung).

Wurde ein neues Objekt detektiert, wird eine Bounding Box in Form eines einfachen Rechtecks um das Objekt bestimmt. Innerhalb der Bounding Box wird wiederum eine Ellipse festgelegt (siehe 8), deren Größe über die Größe der Bounding Box definiert wird. Anschließend wird anhand der Bildpunkte, die sich innerhalb der Ellipse befinden, ein Histogramm über die typischen Objektmerkmale (z. B. Farbe) gebildet. Zur Histogrammbildung (siehe 9) wird ein Epanechnikov-Filterkern eingesetzt, der die Merkmale von Bildpunkten die eher am Rand der Ellipse liegen mit geringerem Gewicht versieht. Dadurch soll der Einfluss von Hintergrundbildpunkten, die am Rande der Ellipse auftauchen können, auf das Histogramm reduziert werden.

Das gewichtete Histogramm des Objekts wird auch als so genanntes Zielmodell bezeichnet, da es das Ziel des Mean-Shift-Trackings (siehe 10) ist, ein möglichst ähnliches Histogramm oder Modell des Objekts im nächsten Bild zu finden. Mit diesem Zielmodell wird nun das traditionelle Mean-Shift-Tracking initialisiert und die Objektverfolgung anhand Objektposition OP und Videosignal VS am Ausgang der Kamera K im Kontrollraum KR beginnt.

Ein Verfahren zur Detektion und/oder Verfolgung von bewegten Objekten in einer Überwachungsszene in der neben den bewegten Objekten Störerobjekte und/oder Störbereiche - auftreten können, eine Vorrichtung sowie ein Computerprogramm ist aus der DE 10 2007 041 893 A1 für Videoüberwachungssysteme bekannt. Videoüberwachungssysteme umfassen üblicherweise eine Mehrzahl von Überwachungskameras und werden eingesetzt, um öffentliche oder gewerbliche Bereiche zu überwachen. Hierzu wird gemäß dem Gegenstand der DE 10 2007 041 893 A1 ein bildgestütztes Verfahren zur Detektion und/oder Verfolgung von bewegten Objekten in einer Überwachungsszene offenbart, welches vorzugsweise mittels digitaler Bildverarbeitung umgesetzt ist. In diesem Zusammenhang umfasst die Detektion das erstmalige Erkennen der bewegten Objekte und die Verfolgung das Wiedererkennen der bewegten Objekte in nachfolgenden Bildern der Überwachungsszene. Das Verfahren ist dazu ausgebildet, eine oder mehrere bewegte Objekte zu detektieren bzw. zu verfolgen. Hierzu werden in der Überwachungsszene mehrere Regionen definiert, welche eine beliebige Form, zum Beispiel rund, rechteckig oder quadratisch, aufweisen können, und überlappungsfrei oder auch überlappend angeordnet sein können. Regionen sind dabei als Bildausschnitte der Überwachungsszene definiert, welche über einen Überwachungszeitraum bevorzugt stationär positioniert sind. Die Regionen werden in verschiedene Regionenklassen eingeteilt, wobei eine erste Regionenklasse sensitive Regionen umfasst, in denen keine und/oder zu vernachlässigende bzw. vernachlässigbare Störer angeordnet und/oder zu erwarten sind. Die Einteilung in die Regionenklassen kann beispielsweise manuell durch einen Benutzer und/oder automatisiert durch eine erste z. B. bildgestützte Inhaltsanalyse der Überwachungsszene, durchgeführt werden In den sensitiven Regionen wird eine sensitive Inhaltsanalyse, insbesondere Videoinhaltsanalyse, zur Detektion und/oder Verfolgen der bewegten Objekte durchgeführt. Die sensitive Inhaltsanalyse umfasst beispielsweise die Schritte von Bildung oder Übernahme eines Szenenreferenzbilds, Segmentierung von Objekten, Detektion und/oder Verfolgung der segmentierten Objekte über die Zeit. Weiterhin wird vorgeschlagen, eine zweite Regionenklasse zu verwenden, in die halbsensitive Regionen einklassifiziert werden und/oder einklassifizierbar sind, wobei in den halbsensitiven Regionen insbesondere stationäre und/oderständige Störer angeordnet und/oder zu erwarten sind. Zur Detektion und/oder Verfolgung der bewegten Objekte in den halbsensitiven Regionen wird eine halbsensitive Inhaltsanalyse durchgeführt, die in Hinblick auf die verwendeten Bildverarbeitungsalgorithmen gegenüber der sensitiven Inhaltsanalyse eingeschränkt und/oder abgewandelt ist. Weiterhin wird vorgeschlagen, insensitive Regionen durch halbsensitive Regionen zu ergänzen und/oder zu ersetzen, wobei in den halbsensitiven Regionen zumindest eine eingeschränkte Inhaltsanalyse der Überwachungsszene durchgeführt wird. Zum einen ist es möglich, diese eingeschränkte Inhaltsanalyse durch Verwendung von vereinfachten Bildverarbeitungsalgorithmen umzusetzen, zum anderen ist es möglich, Informationen der bewegten Objekte, welche in den sensitiven Regionen erarbeitet wurden, in den halbsensitiven Regionen weiter zu verwenden und auf diese Weise die Detektion und/oder Verfolgung der bewegten Objekte in den halbsensitiven Regionen durch Informationsübergabe zu unterstützen. Zwar verbleiben bei den Videoüberwachung durch dieses Vorgehen immer noch schwer zu delektierende Bereiche, jedoch sind Regionen, welche als blinde Flecken ausgebildet sind, ausgeschlossen oder zumindest minimiert. In einer bevorzugten Weiterbildung der Erfindung werden die Regionen optional in eine dritte Regionenklasse eingeteilt, welche insensitive Regionen umfasst, in denen z. B. Störer angeordnet sind, wobei in den insensitiven Bereichen keine Inhaltsanalyse zur Detektion und/oder Verfolgung der bewegten Objekte durchgeführt wird. Bei dieser bevorzugten Weiterbildung der Erfindung werden somit die mehreren Regionen der Überwachungsszene in genau drei Regionenklassen eingeteilt, nämlich mit sensitiven, halbsensitiven und insensitiven Regionen. Bei einer erweiterten Ausführungsform der Erfindung sind mehrere halbsensitive Regionenklassen vorgesehen, wobei sich die verschiedenen halbsensitiven Regionenklassen durch die Art der Inhaltsanalyse unterscheiden. Zur Umsetzung werden bewegte Objekte detektiert und/oder verfolgt, indem ein gegenüber der halbsensitiven Region ungewöhnliches Bewegungsmuster ermittelt wird. Ein Beispiel für ein ungewöhnliches Bewegungsmuster liegt vor, wenn ein Objekt in der halbsensitiven Region sich gegen eine allgemeine Bewegungsrichtung in dieser halbsensitiven Region bewegt. Dieser Fall tritt in der Praxis z. B. auf, wenn eine Person oder ein Fahrzeug sich gegen eine allgemeine Lauf- bzw. Fahrrichtung bewegt. Ein anderes Beispiel eines ungewöhnlichen Bewegungsmusters liegt vor, wenn sich ein Objekt in der halbsensitiven Region mit einer gerichteten Bewegung bewegt, wohingegen in dieser halbsensitiven Region ansonsten nur ungerichtete Bewegungen erfassbar sind. Vorzugsweise werden die Bewegungsmuster durch die Analyse des optischen Flusses (optical flow) in den halbsensitiven Regionen detektiert. Der optische Fluss bezeichnet dabei ein Vektorfeld, das die 2D-Bewegungsrichtung und - geschwindigkeit für Bildpunkte bzw. Pixel oder Bildbereiche einer Bildsequenz angibt. Die beim Gegenstand der DE 10 2007 041 893 A1 beschriebene Vorrichtung weist ein Klassifizierungsmodul auf, welches ausgebildet ist, Regionen in der Überwachungsszene zu definieren und die Regionen in verschiedene Regionenklassen einzuteilen. Eine erste Regionenklasse betrifft sensitive Regionen, in denen keine und/oder zu vernachlässigende Störer angeordnet und/oder zu erwarten sind, eine zweite Regionenklasse betrifft halbsensitive Regionen, in denen Störer angeordnet und/oder zu erwarten sind. Die Vorrichtung weist mindestens ein erstes und ein zweites Analysemodul auf, wobei das erste Analysemodul ausgebildet ist, zur Detektion und/oder der Verfolgung der bewegten Objekte in den sensitiven Regionen eine sensitive Inhaltsanalyse durchzuführen, und das zweite Analysemodul ausgebildet ist, in den halbsensitiven Regionen eine halbsensitive Inhaltsanalyse durchzuführen, die gegenüber der sensitiven Inhaltsanalyse eingeschränkt und/oder abgewandelt ist. Die Inhaltsanalyse ist insbesondere als Videoinhaltsanalyse (VGA Video Content Analysis) ausgebildet und erfolgt bevorzugt über digitale Bildverarbeitung.

Weiterhin ist aus der DE 10 2008 006 709 A1 eine videobasierte Überwachung, insbesondere zur Erkennung eines stillstehenden Objekts in einem videobasierten Überwachungssystem bekannt, bei der zur verbesserten Erkennung stillstehender Objekte das Überwachungssystem, mit

- einem Bilderfassungsmodul zur Erfassung einer Videoaufnahme, die einen interessierenden Bildbereich aufweist;
- einem Bewegungserkennungsmodul, das dafür ausgelegt ist, das Vorhandensein eines sich bewegenden Objekts im interessierenden Bildbereich der erfassten Videoaufnahme zu erkennen; und
- einem Stillstandserkennungsmodul, das dafür ausgelegt ist, das Vorhandensein eines stillstehenden Objekts im interessierenden Bildbereich zu erkennen, und das aktiv wird, wenn das Bewegungserkennungsmodul kein sich bewegendes Objekt im interessierenden Bildbereich eines aktuellen Videobilds der erfassten Videoaufnahme erkennt, wobei das Stillstandserkennungsmodul ferner umfasst
- ein Pixelvergleichsmodul, das dafür ausgelegt ist, den Pixelwert eines Pixels im interessierenden Bildbereich in dem aktuellen Videobild mit dem Pixelwert eines entsprechenden Pixels in einem unmittelbar vorangegangenen Videobild zu vergleichen, um die Anzahl der Pixel im interessierenden Bildbereich des aktuellen Videobilds festzustellen, deren Pixelwerte mit denen der entsprechenden Pixel im unmittelbar vorangegangen Videobild übereinstimmen;
- ein Hintergrundidentifizierungsmodul zur Identifizierung des Hintergrunds, das dafür ausgelegt ist, die Pixel im interessierenden Bildbereich im aktuellen Videobild zu identifizieren, die Teil eines Hintergrunds sind, basierend auf einem Vergleich ihrer Pixelwerte mit einem Hintergrundpixelwert; und
- Signalerzeugungsmittel zur Erzeugung eines Ausgangssignals, um die Erkennung eines stillstehenden Objekts anzuzeigen, wenn die Anzahl von Übereinstimmungen zwischen dem aktuellen Videobild und dem unmittelbar vorangegangenen Videobild einen Schwellwert überschreitet, nachdem

diejenigen Pixel im aktuellen Videobild abgezogen wurden, die als Teil des Hintergrunds identifiziert wurde, ausgestaltet ist.

Das in der DE 10 2008 006 709 A1 beschriebene Überwachungsverfahren, umfasst folgende Schritte:

- Erfassen einer Videoaufnahme, die einen interessierenden Bildbereich aufweist;
- Ermitteln, ob in dem interessierenden Bildbereich der erfassten Videoaufnahme ein sich bewegendes Objekt vorhanden ist, basierend auf einem Hintergrundsubtraktionsverfahren; und
- Bei Nichterkennen eines sich bewegenden Objekts in dem interessierenden Bildbereich eines aktuellen Videobilds der erfassten Videoaufnahme basierend auf dem besagten Hintergrundsubtraktionsverfahren, Durchführen einer Prüfung, um zu erkennen, ob in dem interessierenden Bildbereich ein stillstehendes Objekt vorhanden ist, wobei die Prüfung folgende weitere Schritte umfasst:
- Vergleichen des Pixelwerts eines Pixels im interessierenden Bildbereich in dem aktuellen Videobild mit dem Pixelwert eines entsprechenden Pixels in einem unmittelbar vorangegangenen Videobild, um die Anzahl der Pixel im interessierenden Bildbereich des aktuellen Videobilds festzustellen, deren Pixelwerte mit denen der entsprechenden Pixel im unmittelbar vorangegangen Videobild übereinstimmen;
- Identifizieren derjenigen Pixel im interessierenden Bildbereich im aktuellen Videobild, die Teil eines Hintergrunds sind, basierend auf einem Vergleich ihrer Pixelwerte mit einem Hintergrundpixelwert; und
- Erzeugen eines Ausgangssignals, um die Erkennung eines stillstehenden Objekts anzuzeigen, wenn die Anzahl von Übereinstimmungen zwischen dem aktuellen Videobild und dem unmittelbar vorangegangenen Videobild einen Schwellwert überschreitet, nachdem diejenigen Pixel im aktuellen Videobild abgezogen wurden, die als Teil des Hintergrunds identifiziert wurden.

Die in der DE 10 2008 006 709 A1 beschriebene Idee ist die Bereitstellung eines Verfahrens, durch das die nachhaltige Erkennung eines stillstehenden Objekts mit minimaler Rechenleistung erreicht wird. Das vorgeschlagene Verfahren kommt zum Tragen, sobald mit dem Hintergrundsubtraktionsverfahren aufgrund der dem Hintergrundsubtraktionsalgorithmus inhärenten Beschränkung kein stillstehendes Objekt erkannt werden kann. In einer Ausführungsform wird zur Verbesserung der Reaktionszeit das Stillstand-serkennungsmodul nur aufgerufen, wenn das Bewegungserkennungsmodul ein sich bewegendes Objekt in einem interessierenden Bildbereich eines aktuellen Videobilds der erfassten Videoaufnahme nicht erkennen kann, nachdem ein sich bewegendes Objekt im interessierenden Bildbereich des unmittelbar vorangegangenen Videobilds der erfassten Videoaufnahme erkannt wurde. Weiterhin wird der Hintergrundpixelwert durch Erzeugung eines Bildhistogramms des interessierenden Bildbereichs errechnet, der nur den Hintergrund enthält, und daraus ein Pixelwert entsprechend einem Modus des Histogramms ermittelt. Dieses Leistungsmerkmal bietet den Vorteil, dass nur ein einziger Hintergrundpixelwert benötigt wird, um festzustellen, ob ein Pixel im aktuellen Videobild Teil des Hintergrunds oder eines stillstehenden Objekts ist. Das besagte Bewegungserkennungsmodul umfasst einen Hintergrundsubtraktionsalgorithmus, der auf dem adaptiven multiplen Gauß-Verfahren basiert. Das obengenannte Verfahren der Hintergrundsubtraktion ist besonders nützlich für multimodale Hintergrundverteilungen.

Schließlich ist aus der WO 2004/081875 A1 ein System und ein Verfahren zum Verfolgen einer globalen Form eines in Bewegung befindlichen Objekts bekannt, bei dem ein oder mehrere Bezugspunkte entlang einer Anfangskontur der globalen Form definiert werden, jeder des einen oder der mehreren Bezugspunkte verfolgt wird, wenn sich das Objekt in Bewegung befindet und es wird die Ungewissheit eines Orts eines sich in Bewegung befindlichen Bezugspunkts geschätzt. Eine Form zur Darstellung der Ungewissheit ist eine Kovarianzmatrix. Bei Verwendung eines Teilraum-Formbedingungsmodells wird die Ungewissheit unter Verwendung einer nichtorthogonalen Projektion und/oder Informationsverschmelzung ausgenutzt und es wird jede nachfolgende Kontur angezeigt. Bei dem aus der WO 2004/081875 A1 bekannten System zur optischen Verfolgung der Bewegung einer Form eines Objekts werden ein oder mehrere erste Farbvektoren erzeugt, um Kontraktion von Bezugspunkten entlang der Kontur der Form darzustellen, es werden ein oder mehrere zweite Bezugsvektoren erzeugt, um Dilatation von Bezugspunkten entlang der Kontur der Form darzustellen und die ersten und zweiten Farbvektoren werden periodisch angezeigt und zeigen dadurch Bewegung der Form an.

Wie die vorstehende Würdigung des Standes der Technik aufzeigt, ist eine Vielzahl von Trackingverfahren nebst Weiterentwicklungen zur Objektverfolgung, einschließlich zur Verfolgung der Objektform bekannt. Dabei wird aber die Orientierung nur innerhalb der Bildebene und damit nur 2-dimensional berechnet, so dass die Objektform nicht an die tatsächliche Bewegung des Objekts im dreidimensionalen Raum angepasst werden kann.

Der Erfindung liegt die Aufgabe zugrunde, ein Verfahren und ein System zur automatischen Objekterkennung und anschließenden Objektverfolgung (Tracking) derart auszugestalten, dass dieses neben der Lokalisierung und Verfolgung von sich bewegenden Objekten auch in der Lage ist, die Objektform zu bestimmen und so bei vorhandenen Messdaten eine Berechnung der Orientierung eines Objekts im Raum zu ermöglichen.

Diese Aufgabe wird, gemäß Patentanspruch 1, durch ein Verfahren zur automatischen Objekterkennung und anschließenden Objektverfolgung in digitalen Videosystemen mit mindestens einer Kamera zur Aufzeichnung von Videosequenzen und Übertragung sowie weiterer Verarbeitung oder Auswertung der Videodaten, dadurch gelöst, dass ein auf einem Gaussian Mixture Model GMM basierender Objekterkennungsalgorithmus und eine erweiterte, auf Mean-Shift basierende Objektverfolgung miteinander kombiniert werden, indem

- die Objekterkennung nach Maßgabe eines Modells des Hintergrunds um eine verbesserte Schattenentfernung erweitert wird,
- die so erzeugte Binärmaske zur Erstellung eines asymmetrischen Filterkerns genutzt wird, und
- anschließend der eigentliche Algorithmus zur formadaptiven Objektverfolgung, erweitert um den vorgenannten Erkennungsschritt zur Formanpassung initialisiert wird,

so dass eine Bestimmung zumindest der Objektform oder Objektkontur oder der Orientierung des Objekts im Raum ermöglicht wird.

Weiterhin wird diese Aufgabe, gemäß Patentanspruch 9, durch ein System mit mindestens einer Kamera zur Aufzeichnung von Videosequenzen, an welche ein Mittel zur automatischen Objekterkennung und anschließend ein Mittel zur Objektverfolgung und an welche Mittel zur weiteren Verarbeitung oder Auswertung des Videosignals der Kamera angeschlossen sind, dadurch gelöst, dass das Videosignal der Kamera sowohl einem Mittel mit einem auf einem Gaussian Mixture Model GMM basierenden Objekterkennungsalgorithmus als auch einem Mittel mit einer erweiterten, auf Mean-Shift basierenden Objektverfolgung zugeführt wird, dass das Objekterkennungsmittel Mittel zur Objekterkennung nach Maßgabe eines Modells des Hintergrunds erweitert um eine verbesserte Schattenentfernung aufweist, dass die am Ausgang des Objekterkennungsmittels abgreifbar Binärmaske dem Objektverfolgungsmittel, welches Mittel zur Erstellung eines asymmetrischen Filterkerns und Mittel zur formadaptiven Objektverfolgung, erweitert um einen Segmentierungsschritt zur Formanpassung aufweist, und dass das am Ausgang des Objektverfolgungsmittels abgreifbare Videosignal dem Verarbeitungs-/Auswertemittel zur Bestimmung der Objektform oder Objektkontur oder der Orientierung des Objekts zugeführt wird.

Das erfindungsgemäße Verfahren und das erfindungsgemäße System weisen den Vorteil auf, dass sich bewegende Objekte zunächst automatisch mittels eines GMM basierten Verfahrens erkannt werden und anschließend anhand eines modifizierten Mean-Shift-Trackings sowohl die Objektposition als auch die Qbjektkontur bestimmt wird.

Als Basis für den eigentlichen Trackingalgorithmus wurde das Mean-Shift-Tracking gewählt, weil es von geringer Rechenkomplexität ist und ohne Trainingsset auskommt. Außerdem ist es bei entsprechender Wahl des Referenzmodells in der Lage ein Objekt zu verfolgen, selbst wenn dieses vollständig verdeckt war. Das gesamte erfindungsgemäße Verfahren wird nachstehend als formadaptive Objektverfolgung bezeichnet.

Weitere Vorteile und Einzelheiten lassen sich der nachfolgenden Beschreibung einer bevorzugter Ausführungsformen der Erfindung unter Bezugnahme auf die Zeichnung entnehmen. In der Zeichnung zeigt:

FIG. 1       das Blockschaltbild einer Systemarchitektur zur Videoüberwachung mit formadaptiver Objektverfolgung,

FIG. 2       das Blockschaltbild des Gesamtsystems nach FIG. 1 im Detail,

FIG. 3       das Blockschaltbild der Objekterkennung nach FIG. 1 im Detail,

FIG. 4       das Blockschaltbild der Objektverfolgung nach FIG. 1 im Detail,

FIG. 5       den wesentlichen Ablauf der Objekterkennung,

FIG. 6a      die Erkennung von Kern- und Randschatten in zwei Schritten und

FIG. 6b      die Erkennung von Kern- und Randschatten in einem Schritt,

FIG. 7       den Vergleich der Ergebnisse eines Trackingverfahrens nach dem Stand der Technik und der formadaptiven Objektverfolgung,

FIG. 8       den Vergleich des herkömmlichen Mean-Shift-Tracking (rot) und der formadaptiven Objektverfolgung (grün),

FIG. 9       den schematischer Ablauf einer automatisierten Objektverfolgung beim Stand der Technik,

FIG. 10      für eine Videosequenz *Straße* die minimale, mittlere und maximale Standardabweichung aller Gaußverteilungen aller Bildpunkte,

FIG. 11      eine Videosequenz *Parkplatz,*

FIG. 12      eine Binärmaske BM der Videosequenz *Parkplatz* nach FIG. 11, die durch ein GMM-Verfahren, welches mit örtlicher und zeitlicher Korrelation arbeitet, generiert wurde und

FIG. 13      die endgültige Binärmaske für die Videosequenz *Parkplatz.*

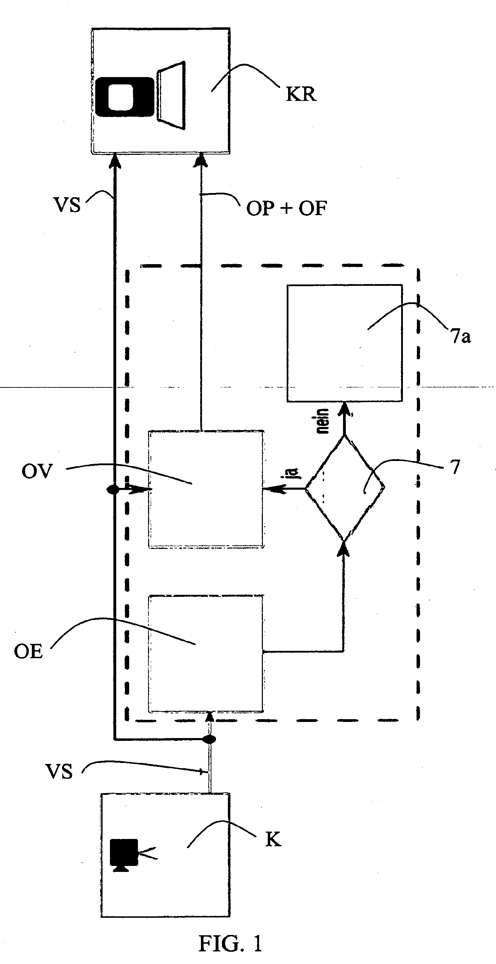

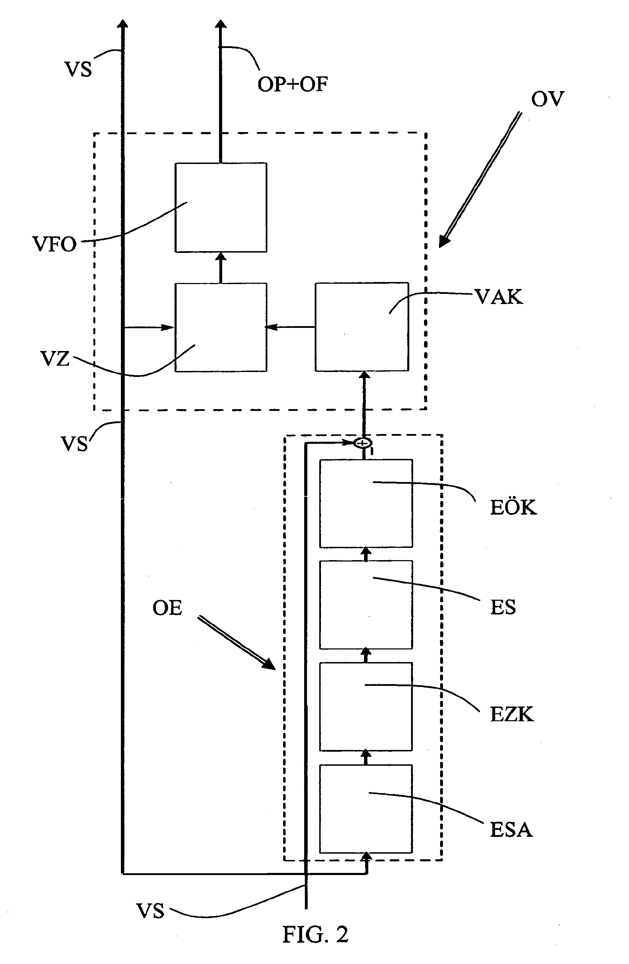

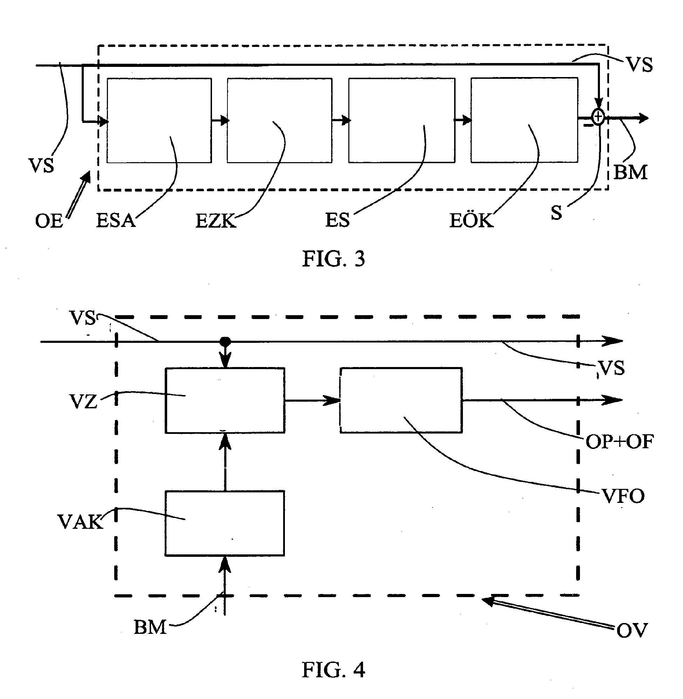

FIG. 1 und FIG. 2 geben für den Anwendungsfall Videoüberwachungssystem einen Überblick über das erfindungsgemäße Videoüberwachungssystem mit formadaptiver Objektverfolgung. Wie man dem Blockschaltbild der Systemarchitektur entnehmen kann, besteht das System nach FIG. 1 und FIG. 2 im Wesentlichen aus einer Objekterkennung (siehe im Detail FIG. 3) gefolgt von der eigentlichen Objektverfolgung (siehe im Detail FIG. 4).

Wie insbesondere FIG. 1 aufzeigt, wird das Videosignal VS einer Kamera K sowohl einem Mittel OE mit einem auf einem Gaussian Mixture Model GMM basierenden Objekterkennungsalgorithmus als auch einem Mittel OV mit einer erweiterten, auf Mean-Shift basierenden Objektverfolgung zugeführt. Das Objekterkennungsmittel OE weist Mittel zur Objekterkennung nach Maßgabe eines Modells des Hintergrunds erweitert um eine verbesserte Schattenentfernung auf (siehe im Detail FIG. 2 und FIG. 3). Die am Ausgang des Objekterkennungsmittels OE abgreifbare Binärmaske BM wird (nach einem Vergleich von erkannten Objekten und schon bereits verfolgten Objekten, und Bestimmung neu erkannter Objekte (siehe 7 bzw. 7a: keine neue Objektverfolgung)) dem Objektverfolgungsmittel OV, welches Mittel zur

EP 2 467 828 B1

Erstellung eines asymmetrischen Filterkerns und Mittel zur formadaptiven Objektverfolgung, erweitert um einen Segmentierungsschritt zur Formanpassung aufweist, zugeführt. Das am Ausgang des Objektverfolgungsmittels OV abgreifbare Videosignal OP+OF, welches Informationen über die Objektposition OP und die Objektform OF enthält, wird neben dem Videosignal VS der Kamera K einem Verarbeitungs-/Auswertemittel, insbesondere einem Kontrollraum KR, zur Bestimmung der Objektform oder Objektkontur oder der Orientierung des Objekts zugeführt.

FIG. 2 und FIG. 3 zeigen das Objekterkennungsmittel OE im Detail. Dieses weist in Serie liegende Mittel zur Begrenzung der Standardabweichung ESA, Mittel zur Berücksichtigung der zeitlichen Korrelation EZK, Mittel zur Schattenentfernung ES und Mittel zur Berücksichtigung der örtlichen Korrelation EÖK, welches mit einem Eingang einer Subtraktionsschaltung S verbunden ist, auf. Dem anderen Eingang der Subtraktionsschaltung S wird das Videosignal VS der Kamera K zugeführt und am Ausgang der Subtraktionsschaltung S ist die Binärmaske BM abgreifbar.

FIG. 2 und FIG. 4 zeigen das Objektverfolgungsmittel OV im Detail. Dieses weist ein Mittel VZ zur Erstellung des Zielmodells über Histogramm, ein Mittel VAK zur Generierung des Filterkerns anhand der Binärmaske BM und ein Mittel VFO zur formadaptiven Objektverfolgung auf. Dem Eingang des Mittels VAK zur Generierung des Filterkerns die Binärmaske BM und dem Eingang des Mittels VZ zur Erstellung des Zielmodells über Histogramm wird das Videosignal VS der Kamera K zugeführt. Am Ausgang des Mittels VFO zur formadaptiven Objektverfolgung, welches mit dem Ausgang des Mittels VZ zur Erstellung des Zielmodells über Histogramm verbunden ist, ist das den Verarbeitungs-/Auswertemittel KR zugeführte Videosignal OP+OF abgreifbar.

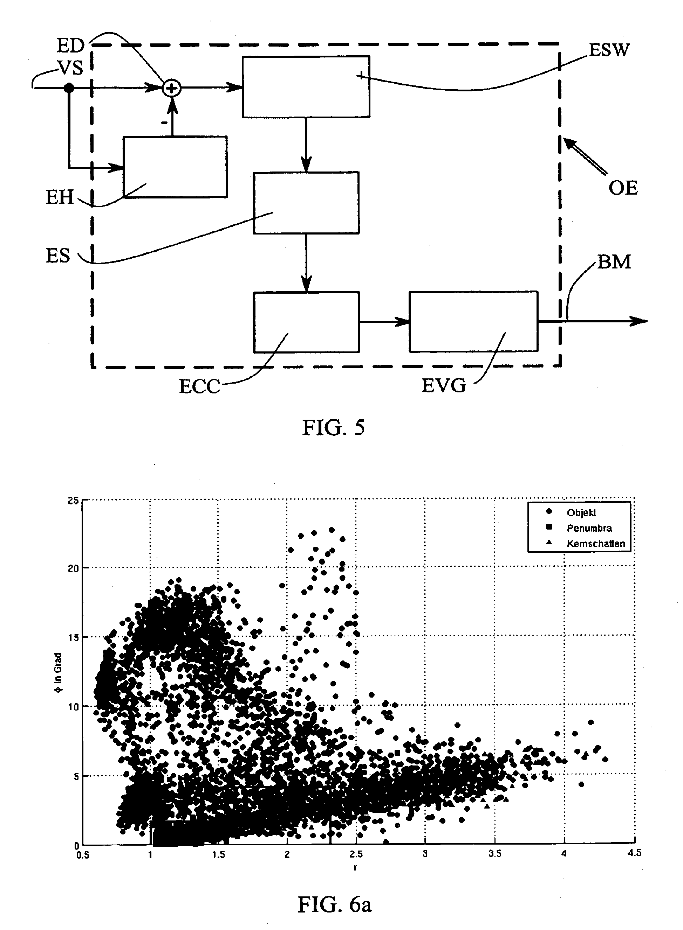

Zur automatischen Erkennung sich bewegender Objekte bzw. sich verändernder Bildbereiche wird - ähnlich wie bei den Systemen zur Objektverfolgung nach dem Stand der Technik - ein Objekterkennungsalgorithmus eingesetzt. FIG. 5 zeigt den wesentlichen Ablauf der Objekterkennung. Dabei wird das Videosignal VS der Kamera K sowohl einem Mittel EH zur Berechnung des Hintergrunds als auch einem Mittel zur Differenzbildung ED des Objekterkennungsmittels OE zugeführt. Am zweiten Eingang des Mittels zur Differenzbildung ED ist der Ausgang des Mittels EH zur Berechnung des Hintergrunds angeschlossen. Weiterhin ist am Ausgang des Mittels zur Differenzbildung ED ein Mittel zur Schwellwertbildung ESW mit in Serie liegender Mittel zur Schattenentfernung ES, Mittel ECC zur Durchführung einer Connected Component Analyse und Mittel EVG zum Vergleich von Komponenten mit verfolgten Objekten angeschlossen, wobei an dessen Ausgang die Binärmaske BM abgreifbar ist.

Im beschriebenen Fall basiert der Objekterkennungsalgorithmus auf den Gaussian Mixture Models GMM, über die ein Modell des aktuellen Bildhintergrundes gebildet wird. Die Modellbildung kann dabei verschiedene Objektmerkmale berücksichtigen, insbesondere Farb-, Kanten- und Strukturinformationen oder speziellere Merkmale wie vorzugsweise die so genannten SIET-Features (Scale invariant Feature Transform). Bei einem SIFT basierten Hintergrund Modell wird nicht jeder Bildpunkt eines neuen Bildes der Sequenz untersucht, sondern die Modellbildung und somit auch die Bewegungsdetektion, findet nur an bestimmten Bildpunkten, den Keypoints, statt. Da für die Berechnung der SIFT Merkmale einzelne Punkte benötigt werden, wird statt einer häufig verwendeten Kantenerkennung ein Ecken-Detektor eingesetzt. Die Eckenfunktion $R(x, y)$ kann nach folgender Gleichung (A) ermittelt werden:

$$R(x, y) = \det(A(x, y)) - q \cdot spur(A(x, y))^2$$

$$(A)$$

Dabei ist det($A$) die Determinante der Matrix $A$ und spur ($A$) die Spur der Matrix A. Als Wert für die Konstante $q$ kann beispielsweise 0,06 gewählt werden, wobei sich für die Funktion $R$ hohe Werte, ergeben, wenn die Matrix $A$ an dieser Stelle zwei große Eigenwerte besitzt. Somit lassen sich die Ecken in einem Bild über eine Schwellwertentscheidung aufgrund der Funktion $R(x, y)$ ermitteln. Da die absoluten Werte der Eckenfunktion $R$ abhängig von Bildinhalt und Kontrast des Bildes sind, wird den Schwellwert in Relation zum Maximum der Eckfunktion angegeben. Als praxistauglich hat sich ein Anteil von 0,00001 bis 0,01 des Maximums als Schwellwert herausgestellt. Je kleiner der Schwellwert eingestellt wird, desto mehr Punkte im Bild werden als Ecken erkannt. Da die Komplexität des Gesamtverfahrens direkt von der Anzahl der Keypoints abhängt, lässt sich somit das Verfahren an die technischen Möglichkeiten anpassen, wobei es wichtig ist, dass ein Mindestabstand zwischen den Eckpunkten eingehalten wird. Aufbauend auf den ermittelten Eckpunkten mit dem zugehörigen SIFT-Merkmals Vektor wird ein Modell des Hintergrundes erstellt und an jedes neue Bild der Sequenz angepasst. Die Anpassung des Modells verläuft in drei Schritten und unabhängig für jeden ermittelten Keypoint. Als erstes wird in einer Umgebung des jeweiligen Eckpunktes nach Modelleinträgen gesucht. Für jeden gefundenen Eintrag wird dessen Ähnlichkeit zum entsprechenden Keypoint ermittelt. Als Maß für die Ähnlichkeit wird die Vektorkorrelation $C$ zwischen dem SIFT-Merkmal des Eckpunktes an der Stelle $(x, y)$ und dem Mittelwertmerkmal des Eintrages an der Stelle $(x_m, y_m)$ nach folgender Gleichung (B) errechnet:

$$C(x, y, x_m, y_m) = \frac{\Phi(x, y) \circ \overline{\Phi}(x_m, y_m)}{\|\Phi(x, y)\| \|\overline{\Phi}(x_m, y_m)\|}$$

(B)

Dabei ist ° das Skalarprodukt und $\|V\|$ bezeichnet die Länge des Vektors $V$. Im zweiten Schritt wird festgestellt, ob der Keypoint einem der Einträge zugeordnet werden kann. Der Keypoint wird nun diesem Modelleintrag zugeordnet, falls gemäß folgender Gleichung (C) gilt:

$$C(x, y, x'_m, y'_m) > \mu_C(x'_m, y'_m) - \sigma_C(x'_m, y'_m)$$

(C)

Das heißt, die Korrelation des Merkmals des Keypoints mit dem Merkmal des Modelleintrages muss einen variablen Schwellwert überschreiten. Im dritten Schritt wird nun das Modell angepasst. Wurde der betrachtete Eckpunkt dem Eintrag zugeordnet, werden die Parameter $\mu_C(x'_m, y'_m)$, $\sigma^2_C(x'_m, y'_m)$ und $\Phi(x'_m, y'_m)$ angepasst. Falls im zweiten Schritt kein Modelleintrag in der Umgebung des untersuchten Keypoints gefunden werden konnte, wird eine neuer Eintrag an der Stelle $(x,y)$ angelegt. Je nachdem, ob der Keypoint im zweiten Schritt dem Hintergrundmodell zugeordnet werden konnte, wird der Keypoint als Hintergrund beziehungsweise als Vordergrund markiert. Nachdem die Modellanpassung für jeden Eckpunkt im aktuellen Bild durchgeführt wurde, wird der Zähler aller Einträge des Modells verringert. Wenn der Zählerstand eines Eintrages auf Null sinkt, wird der Eintrag aus dem Modell entfernt. So wird sichergestellt, dass alte Einträge durch neuere ersetzt werden können, zum Beispiel nach Aufdeckung eines neuen Hintergrundes. Bei der Suche eines passenden Modelleintrages zu einem Keypoint kann nicht nur die Position des Eckpunktes untersucht werden, sondern ein kleines Gebiet um diesen Punkt herum. Ein Vorteil der Ausweitung der Suche auf ein kleines Gebiet besteht in der Robustheit des Modells gegen kleine Verschiebungen der Eckpunkte im Bild. Falls sich ein Eckpunkt des Hintergrundes durch minimale Beleuchtungsänderungen, Bewegung der Kamera durch Wind oder Erschütterung um wenige Bildpunkte verschiebt, kann dieser trotzdem dem richtigen Modelleintrag zugeordnet werden.

Um ein möglichst gutes Modell des Hintergrundes zu erhalten, wurde wie insbesondere **FIG. 2** und **FIG. 3** aufzeigen eine Begrenzung der Standardabweichung (siehe ESA), sowie das Ausnutzen zeitlicher (siehe EZK) und örtlicher Korrelation (siehe EÖK) in das erfindungsgemäße GMM-Verfahren integriert.

Durch ungünstige Konstellationen zwischen dem gebildeten Modell und der Videosequenz kann es vorkommen, dass die Standardabweichung einer Gaußfunktion, die den Vordergrund modelliert, sehr große Werte annimmt. Dies ist vor allem dann der Fall, wenn der Farbwert eines Bildpunkts deutlich vom Mittelwert der zugeordneten Gaußfunktion abweicht und bei der Aktualisierung des Modells große Werte $\|X - \mu_{k,t}\|$ auftreten. Je größer aber $\sigma_k$ wird, desto mehr Farbwerte können ein und derselben Gaußfunktion zugeordnet werden. Dies erhöht wiederum die Wahrscheinlichkeit, dass große Werte für $\|X - \mu_{k,t}\|$ auftreten.

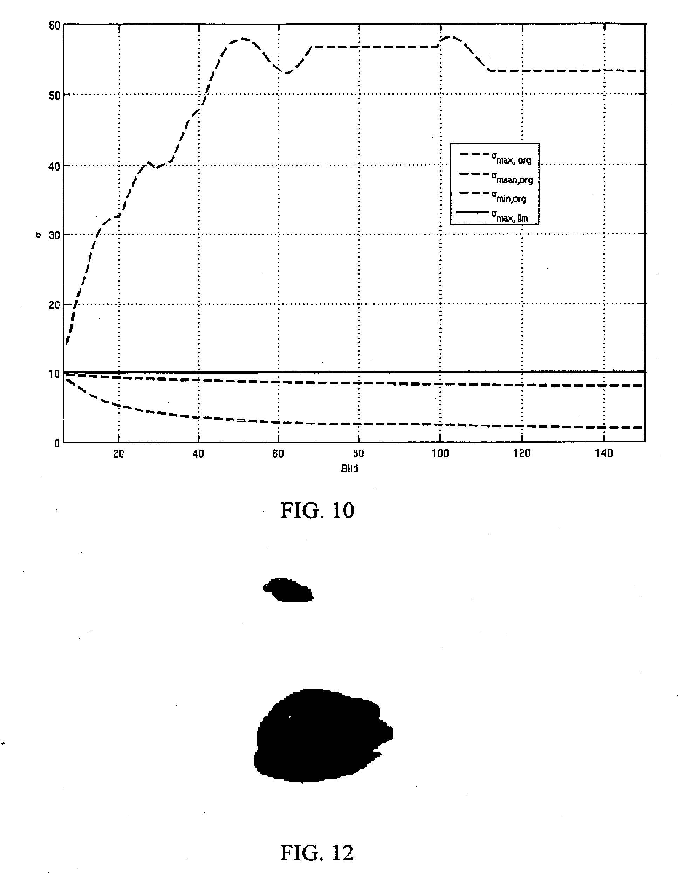

**FIG. 10** illustriert den Verlauf der Standardabweichung über der Zeit für die ersten 150 Bilder der Videosequenz *Straße* mit einer Auflösung von 480x270 Bildpunkten. Die Parameter des GMM-Verfahrens waren auf $K = 3$, $T = 0.7$, $\alpha = 0.01$ und $d = 2.5$ gesetzt. **FIG. 10** zeigt die minimale, mittlere und maximale Standardabweichung aller Gaußverteilungen aller Bildpunkte (gestrichelte Linien). Die maximale Standardabweichung steigt mit der Zeit an und erreicht sehr hohe Werte. Deshalb werden alle Bildpunkte, die keiner anderen Gaußfunktion zugeordnet werden können, dieser Gaußfunktion mit großem $\sigma$-Wert zugewiesen. Dadurch wächst die Auftrittswahrscheinlichkeit und die Verteilung $k$ wird als Hintergrundgaußfunktion eingeordnet. Dies führt weiter dazu, dass Farben des Vordergrunds leicht fäschlicher Weise als Hintergrundfarbe identifiziert werden.

Um diese Problematik zu lösen, wurde eine Begrenzung der Standardabweichung auf ihren anfänglichen Wert $\sigma_0$ vorgenommen, siehe die zur Bildachse parallele Gerade in **FIG. 10**.

Eine Begrenzung der Standardabweichung verhindert bzw. verringert den Fall, dass Vordergrundmerkmale irrtümlich als Hintergrundmerkmale erkannt werden.

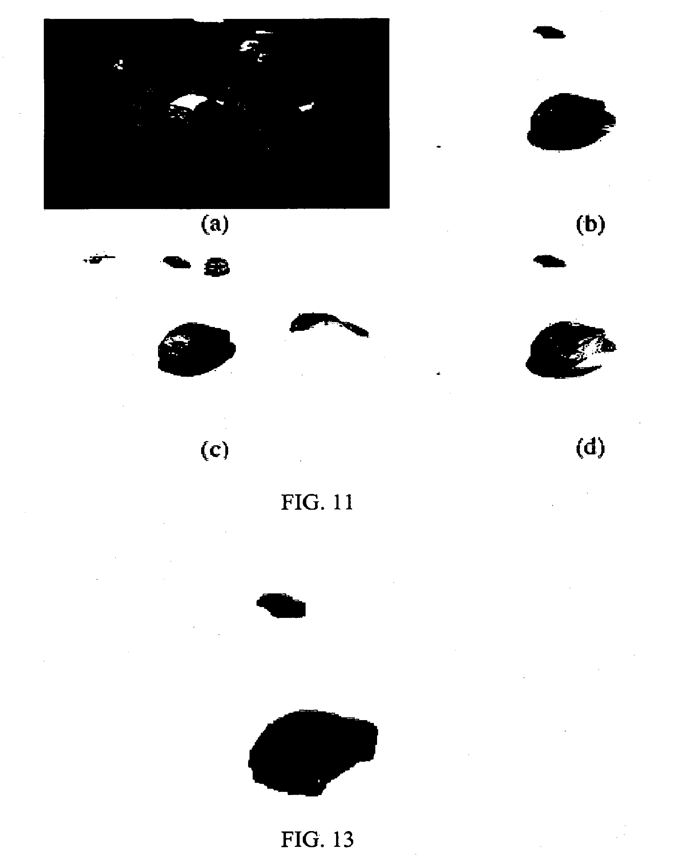

Wie umfangreiche Experimente aufgezeigt haben kommt der Wahl des Parameter $\alpha$ hohe Bedeutung zu, da dieser großen Einfluss auf die Leistungsfähigkeit des Erkennungsalgorithmus hat, wie in **FIG. 11** einer Videosequenz *Parkplatz* in der unteren Reihe zu sehen ist. Einerseits sollte $\alpha$ möglichst groß gewählt werden, um das Modell an neue Gegebenheiten des Bildinhaltes anzupassen. Andererseits sollen kurzzeitige Veränderungen das Modell nicht beein-

flussen, so dass $\alpha$ möglichst klein gewählt werden sollte.

Im Standardverfahren wird nur die mittlere zeitliche Häufigkeit der Farbwerte in der Sequenz berücksichtigt. Je häufiger ein betrachteter Bildpunkt einen bestimmten Farbwert besitzt, desto größer wird die Auftrittswahrscheinlichkeit der entsprechenden Gaußfunktion. Die direkte zeitliche Korrelation der Farbwerte wird jedoch nicht berücksichtigt.

Daher wird erfindungsgemäß ein einfaches Schema vorgeschlagen, um die statischen Hintergrundbereiche zu detektieren und die Anpassung des Modells an diese Bereiche zu verbessern. Hierzu wird das Verfahren um den Parameter $c$ erweitert, der als Zähler der zeitlich aufeinanderfolgenden Zuordnungen eines Bildpunktes zu einer bestimmten Gaußfunktion fungiert:

$$c_t = \begin{cases} c_{t-1} + 1, & \text{if } k_t = k_{t-1} \\ 0 & \text{else} \end{cases}$$

$$(11)$$

wobei $k_{t-1}$ die Verteilung ist, der der Pixelfarbwert im vorherigen Bild zugeordnet wurde, und $k_t$ die aktuelle zugewiesene Gaussfunktion darstellt.

Falls der Zähler c einen Schwellwert $c_{min}$ überschreitet, wird der Faktor $\alpha$ mit einer Konstanten $s > 1$ multipliziert:

$$\alpha_t = \begin{cases} \alpha_0 \cdot s, & \text{falls } c_t > c_{min} \\ \alpha_0 & \text{sonst} \end{cases}$$

$$(12)$$

Der Faktor $\alpha_t$ ist nun zeitabhängig und $\alpha_0$ entspricht dem vom Nutzer festgelegten Wert a. In Bildbereichen mit statischem Bildinhalt passt sich das Modell so schneller dem Hintergrund an. Da die Methode unabhängig von den Parametern $\sigma$ und $\omega$ ist, ist die Funktion auch in aufgedeckten Bildbereichen gewährleistet.

In der oberen Reihe von **FIG. 11** sind das Originalbild der Sequenz *Parkplatz* und der entsprechende Hintergrund, der mit dem um die zeitliche Korrelation erweiterten GMM-Verfahren ($\alpha_0 = 0.001$, $s = 10$ und $c_{min} = 15$) berechnet wurde, abgebildet. Die Erkennungsergebnisse des Standardverfahrens mit $\alpha = 0.001$ und $\alpha = 0.01$ sind in der unteren Reihe in **FIG. 11** dargestellt. Während das Standardverfahren entweder zu viele oder zu wenige Bildbereiche als Vordergrund erkennt, liefert das erfindungsgemäße Verfahren unter Berücksichtigung der zeitlichen Korrelation recht gute Binärmasken. Für alle Experimente wurden die Parameter auf $K = 3$, $T = 0.7$, $\alpha = 0.01$ and $d = 2.5$ gesetzt.

Das GMM-Standardverfahren behandelt jeden Bildpunkt separat. Örtliche Korrelationen zwischen benachbarten Bildpunkten werden hingegen nicht berücksichtigt. Dadurch kommt es zu Falsch-Positiv-Detektionen, die durch rauschbedingte Überschreitung von $d \cdot \sigma_{k,t-1}$ in **Gleichung (4)** oder durch geringe Beleuchtungsänderungen hervorgerufen werden. Die aufgrund von Rauschen fälschlicherweise als Vordergrund erkannten Pixel treten vereinzelt und nicht als größere, zusammenhängende Bildbereiche auf, während die durch Beleuchtungsveränderungen verursachten Falsch-Positiv-Detektionen häufig größere zusammenhängende Bereiche abdecken, wie sie häufig an den Rändern von Schatten, der sogenannten Penumbra, auftreten. Durch Beachten der örtlichen Korrelation können beide Arten von Falsch-Positiv-Detektionen vermieden werden.

Eine erfindungsgemäß sehr einfache Methode, um örtliche Korrelationen zu berücksichtigen, besteht in der Anwendung von morphologischen Operationen auf die Binärmaske in einem Nachverarbeitungsschritt. Da die morphologischen Operationen aber eben auf eine Binärmaske angewandt werden, fließen alle Bildpunkte mit dem gleichen Gewicht in diese Operationen ein. Zur Verringerung der False-Positiv-Detektionen wird vorzugsweise eine gewichtete Entscheidung mit einem Gewicht für die Sicherheit der Zuordnung statt einer festen Entscheidung vorgenommen. Daher wird im Folgenden ein Beispiel für ein entsprechendes Gewicht vorgestellt, mit dem die Bildpunkte (entsprechend ihrer Zuverlässigkeit gewichtet) behandelt werden können.

Da im Falle einer False-Positiv-Detektion der Farbwert $X$ eines Pixels x in der Nähe des Mittelwerts einer der $B$ Hintergrundgaußfunktionen liegt, ergibt sich für mindestens eine Gaußverteilung $k \in [1 \dots B]$ ein kleiner Wert für $\| X_t - \mu_{k,t} \|$. Für tatsächliche Vordergrundbildpunkte trifft dies im Allgemeinen nicht zu.

Nun wird anstatt einer Binärmaske eine Maske M erzeugt, die jedem Vordergrundbildpunkt ein Gewicht zuweist. Für jeden Bildpunkt wird sein gewichteter Maskenwert wie folgt berechnet:

$$M(x,y) = \begin{cases} 0, & \text{if } k(x,y) \in [1\ldots B] \\ \min_{k=[1\ldots B]}(\parallel X_t - \mu_{k,t} \parallel) & \text{else} \end{cases}$$

$$(13)$$

Hintergrundbildpunkte werden weiterhin mit Null gewichtet, während Vordergrundbildpunkte mit dem Minimum der Abstände zu den Mittelwerten der Hintergrundgaußfunktionen gewichtet werden. So werden Vordergrundpixel desto stärker gewichtet, je stärker sie von allen Hintergrundgaußfunktionen abweichen. Zur Nutzung der örtlichen Korrelation werden, ähnlich wie in T. Aach, A. Kaup, and R. Mester, "Statistical model-based change detection in moving video," Signal Processing, vol. 31, no. 2, pp. 165-180, 1993 oder in T. Aach and A. Kaup, "Bayesian algorithms for change detection in image sequences using Markov random fields," Signal Processing: Image Communication, vol. 7, no. 2, pp. 147-160, 1995 vorgeschlagen, die Gewichte innerhalb eines quadratischen Fensters $W$ um den aktuellen Bildpunkt auf summiert. Diese Summation kann auch ähnlich einer Medianfilterung erfolgen. Durch eine anschließende Schwellwertbildung mit Schwellwert $M_{min}$ wird die Anzahl der False-Positiv-Detektionen reduziert und eine Binärmaske $M_B$ kann ausgehend von der gewichteten Maske $M$ wie folgt bestimmt werden:

$$M_B(x,y) = \begin{cases} 1, & \text{if } \sum_W M(x,y) > M_{min} \\ 0 & \text{else} \end{cases}$$

$$(14)$$

**FIG. 12** zeigt eine Binärmaske BM der Videosequenz *Parkplatz,* die durch ein GMM-Verfahren, welches mit örtlicher und zeitlicher Korrelation arbeitet, generiert wurde. Die Parameter für die örtliche Korrelation wurden auf $M_{min}$ = 980 und $W$ = 7 x 7 gesetzt.

Während die Berücksichtigung zeitlicher Korrelationen für eine schnellere Identifizierung von statischen Bildregionen als Hintergrund sorgt, reduziert das Berücksichtigen örtlicher Korrelationen die Anzahl fälschlicher Weise als Vordergrund erkannter Bildpunkte, die durch Rauschen oder Beleuchtungsveränderungen verursacht werden.

Durch Subtraktion des aktuellen Hintergrundmodells vom aktuellen Frame, werden sich verändernde Bildbereiche erkannt. Anschließend wird aus der Differenz zwischen Hintergrund und aktuellem Bild über Schwellwertentscheidung eine Binärmaske bestimmt, die die bewegten Bildbereiche enthält. Aufgrund der Erweiterungen des GMM-Verfahrens ist die Qualität der Maske schon recht gut. Durch ein modifiziertes Verfahren zur Schattenentfernung, kann die Bildqualität jedoch noch weiter verbessert werden.

Obwohl die Berücksichtigung der örtlichen Korrelation die fälschliche Erkennung von Penumbrapixeln reduzieren kann, werden immer noch zu viele Schattenpixel als Objekte des Vordergrunds erkannt. Vor allem der Kernschatten, auch Umbra genannt, wird weiterhin als Vordergrundobjekt erkannt. Deshalb wird das vorstehend beschriebene Erkennungsverfahren mit einer Methode zur Schattenentfernung, welche in F. Porikli and O. Tuzel, "Human body tracking by adaptive background models and mean-shift analysis," in Proc. IEEE International Workshop on Performance Evaluation of Tracking and Surveillance, 2003 beschrieben ist, kombiniert. Da ein Schatten lediglich die Sättigung und die Helligkeit einer Farbe beeinflusst, jedoch keinen Einfluss auf den Farbton hat, können Schattenpixel wie folgt erkannt werden. Die Veränderung in der Luminanz wird im RGB-Farbraum durch Projektion des Farbvektors $X$ auf den Hintergrundfarbvektor $U$ berechnet:

$$h = \frac{\langle X, U \rangle}{|U|}$$

$$(15)$$

Um den Luminanzunterschied zwischen $U$ und $X$ zu messen, wird das Verhältnis $r = |U|/h$ definiert. Der Winkel $\varnothing = \arccos(h/X)$ zwischen Farbvektor $X$ und Hintergrundfarbvektor $U$ misst hingegen die Abweichung der Farbsättigung des aktuellen Bildpunktes vom Hintergrund.

Jeder Vordergrundbildpunkt wird als Schattenpixel klassifiziert, wenn er die beiden folgenden Bedingungen erfüllt:

$$\underline{r_1 < r < r_2 \text{ und } \phi < \phi_1 \quad (16)}$$

wobei $r_1$ den niedrigsten erlaubten Heligkeitswert angibt, $r_2$ den größten erlaubten Heligkeitswert und $ø_1$ den maximal erlaubten Winkel. Da die Bildpunkte des Kernschatten dunkler sind als die Penumbrapixel, können die genannten Bedingungen nicht gleichzeitig für Umbra und Penumbra erfüllt sein. Deshalb wird das Verfahren zur Schattenentfernung unterteilt, damit die Werte für $r_1$, $r_2$ und $ø_1$ entsprechend für die Entfernung des Rand- bzw. des Kernschattens eingestellt werden können. Die Unterteilung in eine Kernschatten- und eine Randschattenentfernung bedeutet, dass in der $ø$-$r$-Ebene der erkannte Schatten durch zwei Rechtecke dargestellt wird, vergleiche **FIG. 6a**.

Wie aus vorstehend Erläuterungen ersichtlich ist, hat Im Allgemeinen ein Schatten keinen Einfluss auf den Farbton, sondern beeinflusst nur Sättigung und Helligkeit einer Farbe. Somit kann ein Bildpunkt anhand seines Farbwerts als Schatten eingestuft werden, wenn dieser eine untere Schranke maximal erlaubter Dunkelheit ($r_1$) nicht unter- und eine obere Schranke maximal erlaubter Helligkeit ($r_2$) nicht überschreitet und die Sättigung nicht zu stark von der Sättigung der Hintergrundfarbe des Modells abweicht ($\phi_1$). In bekannten Verfahren muss die Detektion von Kernschatten und Randschatten separat durchgeführt werden. Das heißt, dass zweimal jeweils drei Parameter festgelegt werden müssen und nach den Termen

$$r_1 < r < r_2 \quad \text{und} \quad \phi < \phi_1 \quad\quad (16)$$

entschieden werden muss, ob ein Pixel als Schattenpixel und damit als Bildpunkt des Hintergrunds eingestuft wird oder nicht.

In **FIG. 6a** ist die Erkennung von Kernschatten und Randschatten in der $\phi$-$r$-Ebene durch die zwei eingezeichneten Rechtecke gekennzeichnet. Das separate Entfernen von Kern- und Randschatten verbessert zwar die Qualität der Schattenentfernung, benötigt aber drei zusätzliche Parameter. Durch Einführen eines weiteren Parameters $\phi_2$ kann der zweite Teil der obigen Gleichung jedoch durch die folgende ersetzt werden:

$$\phi < (\phi_2 - \phi_1)/(r_2 - r_1) * (r - r_1) + \phi_1 \quad (17)$$

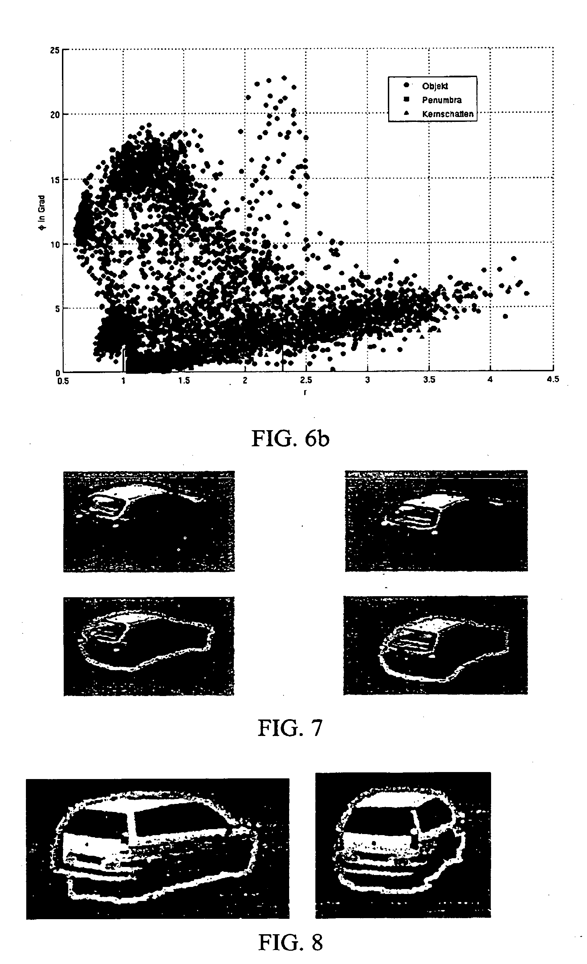

Dadurch dass erfindungsgemäß der weitere Winkel $ø_2$ eingeführt und **Gleichung (16)** durch die **Gleichung (17)** ersetzt wurde, wird in der $ø$-Ebene der erkannte Schatten durch eine keilförmige Fläche (**FIG. 6b**) beschrieben. So können Umbra und Penumbra gleichzeitig in einem anstatt zwei einzelnen Schritten entfernt werden und anstatt drei wird nur ein Parameter zur ursprünglichen Schattenentfernung hinzugefügt.

Um die Leistungsfähigkeit der vorgestellten Schattenentfernung zu demonstrieren, wurden beide erweiterten Verfahren zur Schattenentfernung auf die Ergebnisse angewandt. Bei der Zwei-Schritt-Methode wurden folgende Parameter für die Entfernung des Randschattens gewählt $r_1 = 1$, $r_2 = 1.6$ und $ø_1 = 2$, während die Parameter für die Entfernung des Kernschattens auf $r_1 = 1.6$, $r_2 = 2.3$ und $ø_1 = 4$ gesetzt wurden. Die Ein-Schritt-Methode wurde mit den Parametern $r_1 = 1$, $r_2 = 2.3$, $ø_1 = 1$ und $ø_2 = 4$ durchgeführt.

Die endgültige Binärmaske für die Videosequenz *Parkplatz,* die das erfindungsgemäße GMM-Verfahren mit allen hier vorgestellten Erweiterungen liefert, zeigt **FIG. 13**. Dadurch wird eine gleichzeitiges Entfernen von Kern- und Randschatten mit insgesamt nur vier Parametern möglich. Der durch das modifizierte Verfahren als Schatten erkannte Bereich ist in **FIG. 6b** durch das eingezeichnete Trapez gekennzeichnet.

Im Anschluss an die Schattenentfernung wird die Binärmaske einer so genannten Connected Component Analyse unterzogen, um zusammenhängende Objektbereiche zu bestimmen. Kommen erkannte Bereiche in mehreren aufeinander folgenden Bildern vor, werden sie als zuverlässig erkanntes Objekt eingestuft. Sofern diese zuverlässig erkannten Objekte nicht bereits schon verfolgt werden, kann die eigentliche Objektverfolgung wie in **FIG. 4** abgebildet, beginnen. Traditionelles Mean-Shift-Tracking arbeitet mit einem symmetrischen Filterkern. Jedoch kann ein symmetrischer Filterkern die Form eines Objekts nicht sehr präzise beschreiben. Daher ist beim Einsatz von symmetrischen Filterkernen der Einfluss von Farbinformationen des Hintergrundes, der zu Fehlern bei der Objektverfolgung führen kann, nie ganz zu vermeiden sein. Um die dadurch verursachten Schwierigkeiten zu beseitigen, kommen erfindungsgemäß asymmetrische und anisotrope Filterkerne zu Einsatz. Dazu wird für die zuverlässig erkannten Objekte anhand der aktuellen Binärmaske ein asymmetrischer Filterkern erstellt, der die Objektform bestmöglich beschreibt.

Da das Mean-Shift-Verfahren sich nicht eigenständig initialisieren kann, ist es entweder auf Nutzereingaben oder vorzugsweise auf die Ergebnisse einer vorherigen Objekterkennung nach A. Elgammal, D. Harwood, L. Davis, "Nonparametric Model for Background Subtraction," in Proc. of the 6th European Conference on Computer Vision, Jun./Jul. 2000, pp. 751-767, welche eine Binärmaske des erkannten Objekts liefert, angewiesen. Der asymmetrische Filterkern wird erzeugt, indem für jeden Bildpunkt innerhalb der Maske der normierte Abstand zum Objektrand berechnet wird. Während der Erstellung des Zielmodells wird nun das Histogramm der Objektmerkmale mit dem asymmetrischen Filterkern gewichtet. Im Einzelnen wird, ausgehend von einer Binär- oder Objektmaske, ein asymmetrischer Filterkern konstruiert, indem für jeden Pixel $x_i = (x, y)$ innerhalb der Objektfläche der normierte Abstand zum Objektrand wie folgt bestimmt wird:

$$K(x_i) = x_i\_distance\_from\_boundary/max\_distance\_from\_boundary \quad (18)$$

wobei der Abstand zum Objektrand durch morphologische Operationen bestimmt wird. Um die Größe des Filterkerns mithilfe der Mean-Shift-Iterationen zu skalieren, wird vorzugsweise der Suchbereich um eine Skalierungsdimension erweitert. Der Algorithmus arbeitet dann anstatt im Ortsbereich in diesem erweiterten Suchbereich $\Omega = (x, y, \sigma)$, welcher aus den Bildkoordinaten $(x, y)$ und der Skalierungsdimension $\sigma$ besteht. Dadurch können Änderungen der Objektposition und der Objektgröße gleichzeitig durch die Mean-Shift-Iterationen bestimmt werden.

Unter der Voraussetzung, dass ein Objekt bzw. der Objektumriss durch eine geschlossene Kurve beschrieben werden kann, können die Bildkoordinaten eines Objektpixels $x_i$ anhand einer einfachen Transformation auf einen Skalierungsraum abgebildet werden:

$$\sigma_i = \frac{\delta(x_i)}{r(\theta_i)} = \frac{\| x_i - \hat{x} \|}{r(\theta_i)}$$

$$(19)$$

wobei $\delta(x_i)$ der Abstand zwischen einem Objektpixel $x_i$ und dem Objektschwerpunkt $\hat{x}$ ist, $r(\theta_i)$ die Breite des Filterkerns bei Winkel $\theta_i$ beschreibt und $\sigma_i$ die Skalierung des Objektbildpunktes darstellt.

Eine wichtige Eigenschaft bei der Durchführung der Mean-Shift-Iterationen im erweiterten Suchbereich (auch spatial-scale-space genannt) besteht darin, dass die Summen der Skalierungswerte auf beiden Seiten des Skalierungsmittelwerts gleich sind:

$$\sigma_i = \int_0^{2\pi}\int_0^{\hat{\sigma}r(\alpha)} \frac{\delta}{r(\alpha)} d\delta d\alpha = \int_0^{2\pi}\int_{\hat{\sigma}r(\alpha)}^{r(\alpha)} \frac{\delta}{r(\alpha)} d\delta d\alpha$$

$$(20)$$

Durch Integration erhält man $2\hat{\sigma}^2 - 1 = 0$. Anschließend erhält man durch Umformung dieser Gleichung den Skalierungsmittelwert $\hat{\sigma} = \frac{1}{\sqrt{2}}$.

Der Skalierungsmittelwert ist also eine Konstante und somit unabhängig von der Ojektform. Die Mean-Shift-Iterationen werden nun verwendet, um den Skalierungswert zu aktualisieren. Der neue Skalierungswert bestimmt sich dabei durch $\hat{\sigma} + \Delta\sigma$.

Um den aktualisierten Skalierungswert zu nutzen, muss weiter ein Zusammenhang zwischen Skalierung und Breite des Filterkerns hergestellt werden. In A. Yilmaz, "Object Tracking by Asymmetric Kernel Mean Shift with Automatic Scale and Orientation Selection," in Proc. IEEE Conference on Computer Vision and Pattern Recognition, June 2007, pp. 1-6 ist dieser Zusammenhang über den Faktor $d = 1 + \sqrt{2}\Delta\sigma$ definiert. Dieser Faktor wird zur Berechnung der neuen Fensterbreite $r_{new}(\alpha) = dr(\alpha)$ genutzt.

Anschließend wird der Algorithmus zur eigentlichen Objektverfolgung mit dem gebildeten Zielmodell initialisiert. Um die Mean-Shift-Iterationen im erweiterten Suchbereich durchzuführen, wird ein dreidimensionaler Filterkern über das Produkt aus objektbasiertem Filterkern und einem Filterkern für die Skalierungsdimension definiert:

$$K(x, y, \sigma_i) = K(x, y)K(\sigma) \qquad (21)$$

Als Filterkern für die Skalierungsdimension wird ein eindimensionaler Epanechnikov Filterkern, der durch die Funktion k(z) = 1- |z| wenn |z| < 1 und 0 sonst, mit z = $(\sigma_i - \hat{\sigma})/h_\sigma$ bestimmt ist, eingesetzt. Der Mean-Shift- Vektor bestimmt sich im erweiterten Suchbereich nun wie folgt:

$$\Delta\Omega = \frac{\Sigma_i K(\Omega_i - \widehat{\Omega})\omega(x_i)(\Omega_i - \widehat{\Omega})}{\Sigma_i K(\Omega_i - \widehat{\Omega})\omega(x_i)} \qquad (22)$$

mit $\Delta\Omega$= ($\Delta x$, $\Delta z$, $\Delta\sigma$). Ausgehend von der Objektmaske des ersten Bildes werden der Objektschwerpunkt und das Zielmodell berechnet. Um das Zielmodell robuster zu machen, wird zusätzlich das Histogramm des angrenzenden Hintergrundes bestimmt. Farben die sowohl im Histogramm des Zielmodells als auch im Histogramm der Objektnachbarschaft vorkommen, werden dann im Histogramm des Zielmodells auf Null gesetzt. Dadurch wird der Einfluss von Objektfarben, die dem angrenzenden Hintergrund sehr ähnlich sind, vermieden. Da eine Objektmaske unter Umständen die tatsächliche Objektform nicht exakt beschreibt, kann es vorkommen, dass zu viele Farbinformationen im Zielmodell unterdrückt werden, wenn der unmittelbar an das Objekt angrenzende Hintergrund ins Nachbarschaftshistogramm mit eingehen würde. Um dies zu verhindern, werden die Farben des unmittelbar angrenzenden Hintergrundes nicht berücksichtigt.

Ausgehend von der Farbverteilung $\{q_u(\hat{x})\}_{u=1\ldots m}$ des Zielmodells an Position $\hat{x}$ in Bild n iteriert der Algorithmus folgendermaßen:

1. Initialisiere die Position des Kandidatenmodells in Bild $n + 1$ mit $\hat{x}_0 = \hat{x}$ und setze $d_0 = 1$

2.  Berechne nacheinander die Farbverteilung $p(\hat{x}_0)$ = $\{p_u(\hat{x}_0)\}_{u=1\ldots m}$ und

$$\rho[\mathbf{p}(\hat{x}_0), \mathbf{q}(\hat{x})] = \Sigma_{u=1}^{m}\sqrt{\hat{p}_u(\hat{x}_0)\hat{q}_u(\hat{x})}$$

3. Berechne das Gewicht $\omega(x_i)$ entsprechend G1. (4).

4. Berechne mithilfe des Mean-Shift-Vektors G1. (11)

- die neue Position des Kandidatenmodells $\hat{x}_1 = \hat{x}_0 + \Delta x$

- den Faktor $d_1 = d_0(1 + \sqrt{2}\Delta\sigma)$

- $\{p_u(\hat{x}_1)_{u=1\ldots m}\}$
- $\rho[\mathbf{p}(\hat{x}_1), \mathbf{q}(\hat{x})]$

5. Wenn $\| \hat{x}_1 - \hat{x}_0 \|< \varepsilon$ stoppe, ansonsten $\hat{x}_0 \leftarrow \hat{x}_1$, $d_0 \leftarrow d_1$ und gehe zu Schritt 2.

Der Algorithmus nutzt den Mean-Shift-Vektor in Schritt 4, um den Bhattacharya-Koeffizienten zu maximieren. Der Schwellwert $\varepsilon$ in Schritt 5 fungiert als Abbruchkriterium. Dieser Schwellwert impliziert, dass die Vektoren $\hat{x}_0$ und $\hat{x}_1$ auf denselben Bildpunkt bzw. dieselben Bildkoordinaten zeigen. Der Algorithmus terminiert also entweder, wenn derselbe oder ein kleinerer Wert für den Bhattacharya-Koeffizienten bestimmt wurde, oder, wenn das Kandidatenmodell in zwei aufeinanderfolgenden Bildern seine Position nicht ändert. Nachdem die Mean-Shift-Iterationen konvergiert sind, wird ausgehend von der skalierten Objektform die endgültige Objektform bestimmt. Dafür wird das Bild einer Farbsegmentierung unterzogen. Die Segmentierung wird entsprechend nach D. Comaniciu, P Meer, "Mean Shift: A Robust Approach Toward Feature Space Analysis," IEEE Transactions on Pattern Analysis and Machine Intelligence, vol. 24, pp. 603-619, May 2002 ebenfalls mithilfe des Mean-Shift-Verfahrens durchgeführt. Für jedes Segment innerhalb und in der unmittelbaren Nachbarschaft des Objekts muss nun entschieden werden, ob es zum Objekt- oder zum Hintergrund gehört.

Alle Segmente, die vollständig im Objektbereich enthalten sind, werden als Objektsegmente eingestuft. Ebenfalls werden alle Segmente, deren Farbinformationen vorzugsweise mindestens zu 50% im aktuellen Zielmodell enthalten sind, als Objektsegmente kategorisiert. Mögliche Objektsegmente, welche vorzugsweise zu über 50% im Objektbereich enthalten sind, jedoch viel Farbinformation enthalten, die aus dem Zielmodell eliminiert wurde, werden bei den genannten Entscheidungen nicht berücksichtigt bzw. fälschlich als Hintergrund eingestuft. Um zu verhindern, dass diese Segmente eventuell verloren gehen, wird eine weitere geometrische Bedingung angewandt. So werden Segmente, die vorzugsweise zu mehr als 50% im ursprünglichen Objektbereich enthalten sind, ebenfalls als Objektsegmente eingestuft.

Beispielsweise können drei verschiedenen Typen von Objektsegmenten benutzt werden: Blaue Segmente sind Segmente, die vollständig im Objektbereich enthalten sind, gelbe Segmente sind Segmente, die mindestens zu 50% im aktuellen Zielmodell enthalten sind und grüne Segmente sind Segmente, die mindestens zu 50% in den Objektbereich fallen. Segmente des Hintergrunds sind rot dargestellt. Die endgültige Objektform wird nun über den Umriss aller Objektsegmente bestimmt und über das zu verfolgende Objekt abgebildet.

Ausgehend von der finalen Objektform kann nun der nächste Objekt basierte Filterkern bestimmt und anschließend die Mean-Shift-Iterationen für das nächstfolgende Bild initialisiert und gestartet werden.

Der Vorteil eines asymmetrischen und an die Objektform angepassten Filterkerns liegt darin, dass keine Farbinformation des unmittelbar an das Objekt angrenzenden Hintergrundes in die Histogrammbildung mit eingeht und so fälschlicher Weise vom Mean-Shift-Tracking berücksichtigt wird, wie dies beim herkömmlichen Mean-Shift-Verfahren der Fall ist. Dadurch wird die erfindungsgemäße Objektverfolgung robuster und eine erste wichtige Voraussetzung für eine Verfolgung der Objektform ist ebenfalls erfüllt, da der Trackingalgorithmus bereits während der Initialisierung Informationen über die Objektform erhält.

Im Gegensatz zum herkömmlichen Mean-Shift-Tracking wird die Mean-Shift-Prozedur im erfindungsgemäße Verfahren, wie ansich im Konferenzbeitrag "Object Tracking by Asymmetrie Kernel Mean Shift with Automatic Scale and Orientation Selection" von A. Yilmaz in Proc. IEEE Conference on Computer Vision and Pattern Recognition, June 2007, pp. 1--6 erläutert ist, in einem um eine Skalierungsdimension erweiterten Suchbereich durchgeführt. Dadurch wird eine erste Größenanpassung des asymmetrischen Filterkerns an die tatsächliche Objektform erreicht. Um die skalierte Objektform der tatsächlichen Objektform möglichst genau anzupassen, wird beispielsweise weiter eine Mean-Shift basierte Farbsegmentierung des Objektbereichs sowie dessen unmittelbarer Umgebung vorgenommen. Anschließend werden die einzelnen Segmente anhand zweier Entscheidungskriterien als Objekt- bzw. als nicht Objektregionen kategorisierst. Auf diese Art und Weise kann die Objektform besser angepasst werden, als dies dem im Konferenzbeitrag "Object Tracking by Asymmetrie Kernel Mean Shift with Automatic Scale and Orientation Selection" von A. Yilmaz in Proc. IEEE Conference on Computer Vision and Pattern Recognition, June 2007, pp. 1--6 beschriebenen Verfahren oder über affine Transformationen möglich wäre.

**FIG. 7** zeigt die Ergebnisse eines Trackingverfahrens nach dem Stand der Technik, bei dem die Größe und Orientierung der Objektform nur in 2D bestimmen kann, (oben) und die Ergebnisse der erfindungsgemäßen formadaptiven Objektverfolgung (unten). Das erfindungsgemäße Verfahren ist also in der Lage nicht nur die Objektposition, sondern auch die Objektform bzw. dessen Umriss selbst im Fall so genannter Out-of-plane-Rotationen zu bestimmen.

**FIG. 8** zeigt Ergebnisse des vorgeschlagenen Verfahrens im Vergleich zu Resultaten des traditionellen Mean-Shift-Trackings, wobei das traditionelle Mean-Shift-Tracking rot und die erfindungsgemäße formadaptive Objektverfolgung grün gekennzeichnet ist.

Nachdem die erste Objektmaske durch einen Bewegungserkennungsalgorithmus bestimmt ist, wird der Objektschwerpunkt und der maskenbasierte asymmetrische Filterkern berechnet. Der maskenbasierte Filterkern wird dann genutzt, um das gewichtete Histogramm im RGB-Raum zu bestimmen. Die Farbwerte jedes Farbkanals werden dabei auf 32 Histogrammwerte abgebildet, so dass Histogramm insgesamt 32x32x32 Werte aufweist. Für die Skalierungsdimension wird der Epanechnikov Filterkern mit einer Fensterbreite von $h_a = 0.4$ eingesetzt. Für die Mean-Shift-Segmentierung wird ein multivariater Filterkern entsprechend **Gleichung (35)** in C. Stauffer and W. E. L. Grimson, "Adaptive background mixture models for real-time tracking," in Proc. IEEE Computer Society Conference on Computer Vision and Pattern Recognition, vol. 2, 1999, aus dem Produkt zweier Epanechnikov Filterkernen, einem für den Ortsbereich (Bildkoordinaten) und einem für den Wertebereich (Farbe), erzeugt. Die Fensterbreite für den örtlichen Epanechnikov-Filterkern wird auf $h_r = 4$ gesetzt und die Fensterbreite für den Epanechnikov-Filterkern des Wertebereichs wird auf $h_s = 5$ gesetzt. Die minimale Segmentgröße wurde auf 5 Pixel festgelegt.

Der vorgestellte Algorithmus wurde mit mehreren Videosequenzen getestet. In **FIG. 7** werden die Ergebnisse des vorgestellen formadaptiven Verfahrens (grüne Kontur) mit den Ergebnissen einer Mean-Shift-Objektverfolgung, die nur die Skalierung und 2D Orientierung anpasst, verglichen. Zu Beginn der Objektverfolgung ist zwischen den beiden Methoden kaum ein Unterschied wahrnehmbar, aber sobald das Auto anfängt sich zu drehen, liefert die formadaptive Objektverfolgung wesentlich bessere Resultate.

In **FIG. 8** wird die Methode der formadaptiven Objektverfolgung mit dem Standard-Mean-Shift-Tracking, welches

die $\pm$ 10%-Methode nutzt, verglichen. Das Standardverfahren kann nur bedingt die Position und die Größe des weißen Vans bestimmen, während die formadaptive Objektverfolgung sowohl Position als auch Kontur des weißen Vans sehr gut verfolgt. Lediglich aufgrund von hoher Farbähnlichkeit zwischen Objekt- und Hintergrundfarbe kann die formadaptive Objektverfolgung die Motorhaube des Vans nicht eindeutig vom Hintergrund unterscheiden.

Um die Leistungsfähigkeit der Objektverfolgung genauer zu bewerten wurde eine Erkennungsrate RD und eine Fehlalarmrate der falschen Erkennungen RFP und eine Fehlalarmrate der nicht erkannten Vordergrundpixel RFN berechnet und über die jeweilige Sequenz gemittelt; d.h.

$R_D$ = Anzahl korrekt erkannter Vordergrundbildpunkte : Anzahl der Vordergrundbildpunkte der Referenz,

$R_{FP}$= Anzahl als Vordergrund erkannter Hintergrundbildpunkte : Anzahl der Hintergrundbildpunkte der Referenz,

$R_{FN}$ = Anzahl nicht erkannter Vordergrundbildpunkte : Anzahl der Vordergrundbildpunkte der Referenz.

**Tabelle 1** zeigt $R_D$, $R_{FP}$ und $R_{FN}$ der Videosequenz *Parkplatz.* Alle Raten wurden berechnet, indem das Ergebniss der Objektverfolgung mit einer manuell erstellten Referenz verglichen wurde. RD bestimmt sich als die Anzahl der Pixel, die erkannt wurden und auch den wahren Objektpixlen entsprechen, also innerhalb der Objektregion der manuell erstellten Referenz liegen. Die falschen Positive sind die Anzahl der Fehldetektionenen, also Hintergrundpixel die fälschlicher Weise als Vordergrundpixel erkannt wurden. Die falschen Negativen entsprechen der Anzahl der nicht erkannten Objektpixeln.

| Videosequenz | frames | RD (%) | RFP (%) | RFN (%) |
|---|---|---|---|---|
| Parkplatz | 35 | 98.54 | 8.25 | 1.45 |

Das vorgestellte Verfahren erweitert den Standard-Mean-Shift-Algorithmus, so dass einer Verfolgung der Objektform und -große möglich ist. Dies wird durch Einsatz eines anhand einer Objektmaske erstellten, asymmetrischen Filterkerns zur Verfolgung von Objekten in einem 3-dimensionalen Suchbereich erreicht. Wobei sowohl die Objektposition, als auch die Objektgröße aktualisiert werden. Um die so bestimmte Objektkontur noch genauer an die tatsächliche Kontur des Objektes anzupassen, folgt auf die Mean-Shift-Iterationen ein Segmentierungsschritt. So wird die Objektform auch im Falle von 3D Roationen gut beschrieben. Nur im Falle von großer Farbähnlichkeit zwischen Objekt und angrenzendem Hintergrund stößt das Verfahren an seine Grenzen und es kann zu Fehlern in der Objektverfolgung kommen, da gegebenenfalls zu viele Objektfarben vom Zielmodell entfernt werden.

Das erfindungsgemäße Verfahren bzw. System kann in zukünftigen digitalen Videoüberwachungssystemen zum Einsatz kommen. Besonders in der Vorfeldüberwachung von Flughäfen kann über die genau bestimmte Objektform im zweidimensionalen Videobild eine Bestimmung der Orientierung des Objekts im Raum erfolgen, sofern entsprechende kartografische Daten vorliegen. Dadurch wird es möglich sein, falsch abbiegende Fahr- und Flugzeuge frühzeitig automatisch zu erkennen, um das Fehlverhalten des Fahrers bzw. des Piloten durch Änderung der Verkehrsleitsysteme zu verhindern bzw. zu korrigieren.

Die Erfindung ist nicht auf die dargestellten und beschriebenen Ausführungsbeispiele beschränkt, sondern umfasst auch alle im Sinne der Erfindung gleichwirkenden Ausführungen. Im Rahmen der Erfindung können neben den SIFT (Scale-invariant feature transform)-Merkmalen bzw. Mean-Shift-Merkmalen auch CDOF-Merkmale oder KLT-Merkmale benutzt werden.

**Patentansprüche**

**1.** Verfahren zur automatischen Objekterkennung und anschließenden Objektverfolgung in digitalen Videosystemen mit mindestens einer Kamera (K) zur Aufzeichnung von Videosequenzen und Übertragung sowie weiterer Verarbeitung oder Auswertung der Videodaten, **dadurch gekennzeichnet, dass** ein auf einem Gaussian Mixture Model GMM basierender Objekterkennungsalgorithmus und eine erweiterte, auf Mean-Shift basierende Objektverfolgung miteinander kombiniert werden, indem

• die Objekterkennung nach Maßgabe eines Modells des Hintergrunds um eine verbesserte Schattenentfernung erweitert wird, wobei die Erkennung von Kernschatten und Randschatten gemäß der Gleichung

$$\phi < (\phi_2 - \phi_1)/(r_2 - r_1) * (r - r_1) + \phi_1$$

mit einer unteren Schranke $r_1$ maximal erlaubter Dunkelheit, mit einer oberen Schranke $r_2$ maximal erlaubter Helligkeit, mit einem aktuellen Helligkeitswert r, und mit einem Winkel $\phi_1$, der die minimal erlaubte Abweichung der Farbsättigung des aktuellen Bildpunktes vom Hintergrund angibt sowie einem Winkel $\phi_2$, der die maximal erlaubte Abweichung der Farbsättigung des aktuellen Bildpunktes vom Hintergrund angibt und einem Winkel $\phi$, der die aktuelle Abweichung der Farbsättigung des aktuellen Bildpunktes vom Hintergrund misst, erfolgt, so dass ein gleichzeitiges Entfernen von Kern- und Randschatten mit insgesamt nur vier Parametern ermöglicht wird,
• die so erzeugte Binärmaske (BM) zur Erstellung eines asymmetrischen Filterkerns genutzt wird, und
• anschließend der eigentliche Algorithmus zur formadaptiven Objektverfolgung, erweitert um den vorgenannten Erkennungsschritt zur Formanpassung initialisiert wird,

so dass eine Bestimmung zumindest der Objektform oder Objektkontur oder der Orientierung des Objekts im Raum ermöglicht wird.

2. Verfahren nach Anspruch 1, **dadurch gekennzeichnet, dass** ein an die Objektform angepasster, asymmetrischer Filterkern benutzt wird und dass der Mean-Shift-Algorithmus nur mit den tatsächlichen Objektmerkmalen Farb-, Kanten- oder Strukturinformationen arbeitet, so dass schon während der Initialisierung Informationen über die Kontur des Objekts erhalten werden.

3. Verfahren nach Anspruch 1 oder 2, **dadurch gekennzeichnet, dass** um den lokalisierten Objektbereich der tatsächlichen Objektform möglichst genau anzupassen, eine Farbsegmentierung oder eine Mean-Shift basierende Farbsegmentierung des Objektbereichs sowie dessen unmittelbarer Umgebung vorgenommen wird, dass alle Segmente, die mindestens zu 35% bis 70 %, vorzugsweise über 50% in den Objektbereich fallen, als Objektsegmente eingestuft werden und dass ebenfalls alle Segmente, deren Farbinformationen mindestens zu 35% bis 70 %, vorzugsweise über 50% im aktuellen Zielmodell enthalten sind, als Objektsegmente kategorisiert werden.

4. Verfahren nach Anspruch 1, **dadurch gekennzeichnet, dass** bei der Modellbildung mindestens eines der Objektmerkmale Farb-, Kanten- oder Strukturinformationen oder die sogenannten SIFT-Features berücksichtigt werden und dass eine Begrenzung der Standardabweichung sowie das Ausnutzen zeitlicher und örtlicher Korrelation in das GMM-Verfahren integriert werden.

5. Verfahren nach Anspruch 1, **dadurch gekennzeichnet, dass** durch Subtraktion des aktuellen Hintergrundmodells vom aktuellen Bild der Videosequenz sich verändernde Bildbereiche erkannt werden und dass anschließend aus der Differenz zwischen Hintergrund und aktuellem Bild über Schwellwertentscheidung eine Binärmaske (BM) bestimmt wird, welche die bewegten Bildbereiche enthält.

6. Verfahren nach Anspruch 1, **dadurch gekennzeichnet, dass** unter Benutzung eines Ecken-Detektors, die Eckenfunktion *R(x, y)* nach folgender Gleichung (A) ermittelt wird:

$$R(x, y) = \det(A(x, y)) - q \cdot \mathrm{spur}(A(x, y))^2 \qquad (A)$$

wobei det(*A*) die Determinante der Matrix *A* und spur *(A)* die Spur der Matrix A ist und die Ecken in einem Bild über eine Schwellwertentscheidung aufgrund der Funktion *R(x, y)* ermittelt werden.

7. Verfahren nach Anspruch 1, **dadurch gekennzeichnet, dass** im Anschluss an die Schattenentfernung zur Bestimmung zusammenhängender Objektbereiche die Binärmaske (BM) einer so genannten Connected Component Analyse unterzogen wird.

8. Verfahren nach Anspruch 7, **dadurch gekennzeichnet, dass** wenn in mehreren aufeinander folgenden Bildern Bereiche erkannt werden, diese als zuverlässig erkannte Objekte eingestuft werden und dass für die zuverlässig erkannten Objekte anhand der aktuellen Binärmaske (BM) ein asymmetrischer Filterkern erzeugt wird, indem für jeden Bildpunkt innerhalb der Binärmaske (BM) der normierte Abstand zum Objektrand berechnet wird.

9. System mit mindestens einer Kamera (K) zur Aufzeichnung von Videosequenzen, an welche ein Mittel zur automatischen Objekterkennung und anschließend ein Mittel zur Objektverfolgung und an welche Mittel (KR) zur weiteren Verarbeitung oder Auswertung des Videosignals (VS) der Kamera (K) angeschlossen sind, **dadurch gekennzeichnet, dass** das Videosignal (VS) der Kamera (K) sowohl einem Mittel (OE) mit einem auf einem Gaussian Mixture Model GMM basierenden Objekterkennungsalgorithmus als auch einem Mittel (OV) mit einer erweiterten, auf Mean-Shift basierenden Objektverfolgung zugeführt wird, dass das Objekterkennungsmittel (OE) Mittel zur Objekterkennung nach Maßgabe eines Modells des Hintergrunds erweitert um eine verbesserte Schattenentfernung aufweist, indem die Erkennung von Kernschatten und Randschatten gemäß der Gleichung

$$\phi < (\phi_2 - \phi_1)/(r_2 - r_1) * (r - r_1) + \phi_1$$

mit einer unteren Schranke $r_1$ maximal erlaubter Dunkelheit, mit einer oberen Schranke $r_2$ maximal erlaubter Helligkeit, mit einem aktuellen Helligkeitswert r, und mit einem Winkel $\phi_1$, der die minimal erlaubte Abweichung der Farbsättigung des aktuellen Bildpunktes vom Hintergrund angibt sowie einem Winkel $\phi_2$, der die maximal erlaubte Abweichung der Farbsättigung des aktuellen Bildpunktes vom Hintergrund angibt und einem Winkel $\phi$, der die aktuelle Abweichung der Farbsättigung des aktuellen Bildpunktes vom Hintergrund misst, erfolgt, so dass ein gleichzeitiges Entfernen von Kern- und Randschatten mit insgesamt nur vier Parametern ermöglicht wird, dass die am Ausgang des Objekterkennungsmittels (OE) abgreifbare Binärmaske (BM) dem Objektverfolgungsmittel (OV), welches Mittel zur Erstellung eines asymmetrischen Filterkerns und Mittel zur formadaptiven Objektverfolgung, erweitert um den vorgenannten Erkennungsschritt zur Formanpassung aufweist, und dass das am Ausgang des Objektverfolgungsmittels (OV) abgreifbare Videosignal (OP+OF) dem Verarbeitungs-/Auswertemittel (KR) zur Bestimmung der Objektform oder Objektkontur oder der Orientierung des Objekts zugeführt wird.

10. System nach Anspruch 9, **dadurch gekennzeichnet, dass** das Objekterkennungsmittel (OE) in Serie liegende Mittel zur Begrenzung der Standardabweichung (ESA), Mittel zur Berücksichtigung der zeitlichen Korrelation (EZK), Mittel zur Schattenentfernung (ES) und Mittel zur Berücksichtigung der örtlichen Korrelation (EÖK), welches mit einem Eingang einer Subtraktionsschaltung (S) verbunden ist, aufweist, dass dem anderen Eingang der Subtraktionsschaltung (S) das Videosignal (VS) der Kamera (K) zugeführt wird und dass am Ausgang der Subtraktionsschaltung (S) die Binärmaske (BM) abgreifbar ist.

11. System nach Anspruch 9, **dadurch gekennzeichnet, dass** das Objektverfolgungsmittel (OV) ein Mittel (VZ) zur Erstellung des Zielmodells über Histogramm, ein Mittel (VAK) zur Generierung des Filterkerns anhand der Binärmaske (BM) und ein Mittel (VFO) zur formadaptiven Objektverfolgung aufweist und dass dem Eingang des Mittels (VAK) zur Generierung des Filterkerns die Binärmaske (BM) und dem Eingang des Mittels (VZ) zur Erstellung des Zielmodells über Histogramm das Videosignal (VS) der Kamera (K) zugeführt wird, wobei am Ausgang des Mittels (VFO) zur formadaptiven Objektverfolgung, welches mit dem Ausgang des Mittels (VZ) zur Erstellung des Zielmodells über Histogramm verbunden ist, das den Verarbeitungs-/Auswertemittel (KR) zugeführte Videosignal (OP+OF) abgreifbar ist.

12. System nach Anspruch 9, **dadurch gekennzeichnet, dass** das Videosignal (VS) der Kamera (K) sowohl einem Mittel (EH) zur Berechnung des Hintergrunds als auch einem Mittel zur Differenzbildung (ED) des Objekterkennungsmittels (OE) zugeführt wird, wobei am zweiten Eingang des Mittels zur Differenzbildung (ED) der Ausgang des Mittels (EH) zur Berechnung des Hintergrunds angeschlossen ist, und dass am Ausgang des Mittels zur Differenzbildung (ED) ein Mittel zur Schwellwertbildung (ESW) mit in Serie liegender Mittel zur Schattenentfernung (ES), Mittel (ECC) zur Durchführung einer Connected Component Analyse und Mittel (EVG) zum Vergleich von Komponenten mit verfolgten Objekten angeschlossen ist, an dessen Ausgang die Binärmaske (BM) abgreifbar ist.

13. Computerprogramm mit Programm-Codemitteln, um alle Schritte des Verfahrens nach einem der Ansprüche 1 bis 8 durchzuführen, wenn das Programm auf einem Computer und/oder einer Vorrichtung nach Anspruch 9 ausgeführt wird.

**Claims**

1. A method for automatic object detection and subsequent object tracking in digital video systems having at least one camera (K) for recording and transmitting video sequences, as well as further processing or evaluation of video data, **characterized in that** an object detection algorithm based on a Gaussian mixture model GMM and an expanded object tracking based on Mean-Shift to be combined with each other in the object detection, wherein

   • the object detection is expanded in accordance with a model of the background by improved removal of shadows, wherein the detection of penumbra and umbra takes place according to the equation

$$\phi < (\phi_2 - \phi_1) / (r_2 - r_1) * (r - r_1) + \phi_1$$

   with a lower threshold $r_1$ of maximum allowed darkness, with an upper threshold $r_2$ of maximum allowed brightness, with a current brightness value r, and with an angle $\phi_1$ indicates the minimum allowable deviation of the color saturation of the current pixel from the background as well as an angle $\phi_2$ indicates the maximum allowed deviation of the color saturation of the current pixel from the background and an angle $\phi$, which measures the current deviation of the color saturation of the current pixel from the background, such that a simultaneous removal of penumbra and umbra by totally only four parameters is possible,
   • the binary mask (BM) generated in this way is used to create an asymmetric filter core, and
   • then the actual algorithm for the shape-adaptive object tracking, expanded by the abovementioned recognition step for adapting the shape is initialized, such that a determination of at least of the object shape or the object contour or the orientation of the object in space is made possible.

2. The method according to claim 1, **wherein** using a asymmetric filter core adapted to the object form, and in that working the mean shift algorithm only with the actual object characteristics color -, edges- or structure information such that during the initialization information about the contour of the object to be obtained.

3. The method according to claim 1 or 2, **wherein** adapting the localized object region as closely as possible to the actual object shape, a color segmentation or a Mean shift based color segmentation of the object region and its immediate object region is made, in that classifying as an object segments all segments which are falling at least 35% to 70%, preferably about 50% within the object region, and in that categorizing as an object segments also all the segments whose color information are included at least 35% to 70%, preferably above 50% in the current target model.

4. The method according to claim 1, **wherein** taking into account in the model form at least one of the object characteristics color-, edges- or structural information or the so-called SIFT-features and in that integrating in the GMM method a limitation of the standard deviation as well as an exploiting of temporal and spatial correlation.

5. The method according to claim 1, **wherein** subtracting the current background model from the current image of the video sequence changing image regions are detected and in that subsequently determining a binary mask (BM), which contains the moving image regions from the difference between the background and the current picture by a threshold decision.

6. The method according to claim 1, **wherein** by using a corner detector the corner function $R\,(x, y)$ is determined according to the following equation (A):

$$R(x, y) = \det(A(x, y)) - q \cdot \mathrm{spur}(A(x, y))^2$$

$$(A)$$

   whereby det $(A)$ is the determinant of the matrix A and trace $(A)$ is the trace of the matrix A and the corners in an image can be determined via a threshold decision result of the function $R\,(x, y)$.

7. The method according to claim 1, **wherein** making a so-called Connected Component Analysis of the binary mask (BM) after the shadow removal for the determination of related object regions.

8. The method according to claim 7, **wherein** classifying as reliable objects if in several consecutive images areas are recognized, and in that generating an asymmetric filter kernel for the reliably recognized objects based on the current binary mask (BM) by calculating the normalized distance to the object boundary for each pixel within the binary mask (BM).

9. A system comprising at least one camera (K) for recording video sequences to which are connected a means for automatic object recognition and then a means for object tracking and to which means (KR) for further processing or analysis of the video signal (VS) of the camera (K) is connected, **wherein** the video signal (VS) of the camera (K) is supplied to both an object detection means (OE) based on a Gaussian Mixture Model GMM object recognition algorithm and a means (OV) having an enlarged based on Mean shift object tracking, in that the object detection means (OE) comprises means for object recognition in accordance with a model of the background enlarged by an improved shadow removal, wherein the detection of penumbra and umbra takes place according to the equation

$$\phi < (\phi_2 - \phi_1) / (r_2 - r_1) * (r - r_1) + \phi_1$$

with a lower threshold $r_1$ of maximum allowed darkness, with an upper threshold $r_2$ of maximum allowed brightness, with a current brightness value r, and with an angle $\phi_1$ indicates the minimum allowable deviation of the color saturation of the current pixel from the background as well as an angle $\phi_2$ indicates the maximum allowed deviation of the color saturation of the current pixel from the background and an angle $\phi$, which measures the current deviation of the color saturation of the current pixel from the background, so that a simultaneous removal of penumbra and umbra by totally only four parameters is possible, in that the at the output arising binary mask (BM) of the object recognition means (OE) is connected to the object tracking means (OV), which comprises means for creating an asymmetric filter core and means for an adaptive object tracking expanded by the abovementioned recognition step comprises the shape adaptation, and in that at the output arising video signal (OP + OF) of the object tracking means (OV) is connected to the processing / evaluating means (KR) for determining the shape of the object or the object contour or the orientation of the object.

10. The system according to claim 9, **wherein** the object recognition means (OE) comprises in series means for limiting the standard deviation (ESA), means for taking into account the temporal correlation (EZK), means for shadow removal (ES) and means to take account of local correlation (EÖK), which is connected to an input of a subtraction circuit (S), in that to an other input of said subtraction circuit (S) the video signal (VS) of the camera (K) is connected and in that at an output of said subtraction circuit (S) the binary mask (BM) arises.

11. The system according to claim 9, **wherein** the object tracking means (OV) comprises a means (VZ) for creating the target model via histogram, a means (VAK) for generating the filter core based on the binary mask (BM) and a means (VFO) for form adaptive object tracking and in that the binary mask (BM) is supplied to the input of the means (VAK) for generating the filter core, and the video signal (VS) of the camera (K) is supplied to the input of the means (VZ) to create the target model via histogram, wherein at the output of the means (VFO) for form adaptive object tracking, which is connected to the output of the means (VZ) for creating the target model via histogram, the input video signal (OP + OF) connected to the processing/evaluating means (KR) arises.

12. The system according to claim 9, **wherein** the video signal (VS) of the camera (K) is supplied both to a means (EH) for the calculation of the background and to a means for forming a difference (ED) of the object detection means (OE), wherein a second input of the means for forming the difference (ED) is connected to an output of the means (EH) for calculating the background, and in that at the output of the means for forming the difference (ED) a means for thresholding (ESW) is connected, comprising in series a means for shadow removal (ES), a means (ECC) for performing a connected component analysis and a means (EVG) for comparison of components connected with persecuted objects, whereas at the output of said comparison means (EVG) the binary mask (BM) arises.

13. A computer program comprising program code means to carry out all steps of the method according to any one of claims 1 to 8 if said program is running on a computer and / or a device according to claim 9.

**Revendications**

**1.** Un procédé de reconnaissance automatique d'objets et de suivi subséquent de l'objet dans des systèmes vidéonumériques comprenant au moins une caméra (K) pour l'enregistrement de séquences vidéo et la transmission, de même que le traitement postérieur ou l'évaluation des données vidéo, **caractérisé en ce que** de combiner un algorithme de reconnaissance d'objet basé sur un modèle mixte gaussien (GMM) avec un suivi d'objet basé sur le "Mean Shift", comprenant une extension de la reconnaissance d'objet, par

• la reconnaissance d'objet en fonction d'un modèle du fond s'étend à une élimination améliorée de l'ombre, dans lequel la détection du l'ombre portée et du l'ombre bordure est fait selon l'équation

$$\phi < (\phi_2 - \phi_1) / (r_2 - r_1) * (r - r_1) + \phi_1$$

avec une limite $r_1$ permis une l'obscurité maximale, avec une limite supérieure $r_2$ permis une luminosité maximale, avec une valeur de luminosité actuelle de r, et avec un angle $\phi_1$, ce qui indique l'écart minimal admissible de la saturation de la couleur du pixel courant à partir de l'arrière-plan et une angle $\phi_2$, ce qui indique l'écart maximal admissible de la saturation de la couleur du pixel courant à partir de l'arrière-plan et une angle $\phi$, ce qui mesure l'écart de courant de la saturation de la couleur du pixel courant à partir de l'arrière-plan a lieu, de sorte qu'une élimination simultanée du l'ombre portée et du l'ombre bordure avec un total de seulement quatre paramètres est possible,
• le masque binaire (BM) crée ainsi est utilisée pour créer un noyau de filtre asymétrique, et
• alors l'algorithme réelle pour la forme objet adaptative suivi, élargi par une étape de la détection susmentionné pour la forme correspondant est initialisé, tels que la détermination d'au moins la forme de l'objet ou de l'objet ou de l'orientation contour de l'objet est activé dans l'espace.

**2.** Le procédé selon la revendication 1, **caractérisé en ce qu'**une valeur adaptée à la forme de l'objet, le noyau de filtre asymétrique est utilisée et que l'algorithme de "Mean Shift" fonctionne uniquement avec le caractéristique objet comprend la couleur, le bord ou la structure d'informations, de sorte que déjà lors d'initialisation des informations sur contour de l'objet peut être obtenu.

**3.** Le procédé de la revendication 1 ou 2, **caractérisé en ce que** pour adapter la région objet localisée de la forme réelle de l'objet le plus près possible, une segmentation de couleur ou une segmentation de couleur basé sur "Mean Shift" de la région de l'objet et son voisinage immédiat est faite, que tous les segments qui est au moins 35% à 70%, de préférence de tomber plus de 50% dans la région de l'objet sont classés comme des segments de l'objet, et que, tous les segments, l'information de couleur est contenue au moins 35% à 70%, de préférence d'environ 50% dans le modèle de consigne de courant sont classés comme des segments de l'objet.

**4.** Le procédé selon la revendication 1, **caractérisé en ce que** dans le modèle pour former, au moins une des caractéristiques de référence de la couleur, du bord ou des informations de structure ou les caractéristiques dites EIPD sont prises en compte et que, la limitation de l'écart type, ainsi que l'exploitation de la corrélation temporelle et spatiale sont intègre dans la méthode GMM.

**5.** Le procédé selon la revendication 1, **caractérisé en ce que** par soustraction au modèle de fond actuelle de l'image actuelle de la séquence vidéo, des zones d'image changeantes sont reconnu, et que, par la suite à partir de la différence entre le fond et l'image en cours et par une décision de valeur d'un masque binaire (BM) est déterminées, qui contient les régions d'image en mouvement.

**6.** Le procédé selon la revendication 1, **caractérisé en ce que** par utilisé un détecteur d'angle, la fonction de coin *R (x, y)* peut être déterminée en utilisant l'équation suivante (A):

$$R(x, y) = \det(A(x, y)) - q \cdot \mathrm{spur}(A(x, y))^2$$

$$(A)$$

il est det (A) est le déterminant de la matrice A et la trace (A) est la trace de la matrice A et les coins d'une image peut être déterminée par une décision de valeur en raison de la fonction *R (x, y)*.

7. Le procédé selon la revendication 1, **caractérisé en ce qu'**après l'élimination de l'ombre pour la détermination de régions liée, le masque binaire de l'objet (BM) est soumis d'une dite "Connected Component Analyse".

8. Le procédé selon la revendication 7, **caractérisé en ce que** lorsque plusieurs images dans successives zones sont détectés, ces objets sont classifiés comme fiables détectés, et que, pour détecter de manière fiable des objets sur la base du masque binaire actuel (BM), un noyau de filtre asymétrique est créé, par pour chaque pixel à l'intérieur du masque binaire (BM) la distance normalisée vers le bord de l'objet est calculée.

9. Système avec au moins une caméra (K) pour l'enregistrement de séquences vidéo dans laquelle un moyen de reconnaissance automatique d'objets et de suivi un moyen d'objet et à laquelle des moyens (KR) pour le traitement ultérieur ou l'analyse du signal vidéo (VS) de la caméra (K) sont reliés, **caractérisé en ce que** le signal vidéo (VS) de la caméra (K) est amené à la fois d' un moyen (OE) ayant une base d'un mélange gaussien modèle GMM algorithme et d'un moyen (OV) avec un suivi d'objets basé sur "Mean Shift" étendu, que les moyens de détection objet (OE) ayant un moyen pour la détection d'objet en fonction d'un modèle du fond étendu par une suppression des ombres amélioré dans lequel la détection du l'ombre portée et du l'ombre bordure est fait selon l'équation

$$\phi < (\phi_2 - \phi_1) / (r_2 - r_1) * (r - r_1) + \phi_1$$

avec une limite $r_1$ permis une l'obscurité maximale, avec une limite supérieure $r_2$ permis une luminosité maximale, avec une valeur de luminosité actuelle de r, et avec un angle $\phi_1$, ce qui indique l'écart minimal admissible de la saturation de la couleur du pixel courant à partir de l'arrière-plan et une angle $\phi_2$, ce qui indique l'écart maximal admissible de la saturation de la couleur du pixel courant à partir de l'arrière-plan et une angle $\phi$, ce qui mesure l'écart de courant de la saturation de la couleur du pixel courant à partir de l'arrière-plan a lieu, de sorte qu'une élimination simultanée du l'ombre portée et du l'ombre bordure avec un total de seulement quatre paramètres est possible, **en ce qu'** à la sortie des moyens de détection d'objet (OE) peut être prélevé masque binaire (BM) qui est fourni au moyen de suivi d'objets (OV), ce qui ayant des moyens pour générer un noyau de filtre asymétrique et des moyens pour le suivi d'objets de forme adaptée, élargi par une étape de segmentation pour de forme complémentaire, et que, à la sortie des moyens de suivi d'objets (OV) le signal vidéo (OP + DE) est prélevé, qui est amenée au traitement / évaluation (KR) pour déterminer la forme de l'objet ou de l'objet contour ou l'orientation de l'objet.

10. Système selon la revendication 9, **caractérisé en ce que** les moyens de détection d'objet (OE) ayant des moyens disposés en série pour limiter la déviation standard (ESA), des moyens pour prendre en compte la corrélation temporelle (EZK), des moyens d'élimination de l'ombre (ES), et des moyens pour prendre en compte la corrélation locale (EÖK), qui est reliée à une entrée d'un circuit de soustraction (S), que l'autre entrée du circuit de soustraction (S) le signal vidéo (VS) de la caméra (K) est fourni et que, à la sortie du circuit de soustraction (S) le masque binaire (BM) peuvent être prélevé.

11. Système selon la revendication 9, **caractérisé en ce que** les moyens de suivi d'objets (OV) ayant des moyens (VZ) pour créer le modèle cible sur l'histogramme, des moyens (VAK) pour produire le noyau de filtre sur la base du masque binaire (BM) et des moyens (VFO) pour former le suivi d'objets adaptatif et **en ce que** à l'entrée du moyen (VAK) pour produire le noyau de filtre, le masque binaire (BM) est introduit et à l'entrée des moyens (VZ) pour créer le modèle cible sur l'histogramme le signal vidéo (VS) de la caméra (K) est introduit, dans lequel à la sortie du moyen (VFO) pour former suivi d'objet adaptatif, qui est reliée avec la sortie du moyen (VZ) pour la création du modèle de cible sur l'histogramme, le signal vidéo (OP + D) amenée au moyen de traitement / évaluation (KR) peuvent être prélevé.

12. Système selon la revendication 9, **caractérisé en ce que** le signal vidéo (VS) de la caméra (K), est amené à la fois des moyens (EH) pour calcul de l'arrière-plan, ainsi que des moyens pour former la différence (ED) des moyens de détection d'objet (D), dans lequel à la seconde entrée des moyens pour former la différence (ED) la sortie du moyen (EH) pour calcul de l'arrière-plan est connecté, et que, à la sortie des moyens pour former la différence (ED) des moyens pour seuillage (ESW) est reliée, qui ayant en série des moyens de suppression de l'ombre (ES), des moyens (ECC) pour effectuer "Connected Component Analyse" et des moyens (EVG) pour la comparaison avec des composants d'objets suivis, à la sortie duquel le masque binaire (BM) peuvent être prélevé.

**13.** Programme d'ordinateur avec moyens de code de programme pour exécuter toutes les étapes du procédé selon l'une des revendications 1 à 8, lorsque ledit programme est exécuté sur un ordinateur et / ou un dispositif selon la revendication 9.

KR

VS

OP + OF

7a

OV

ja    nein

7

OE

VS

K

FIG. 1

VS

OP+OF

OV

VFO

VAK

VZ

VS

OE

EÖK

ES

EZK

ESA

VS

FIG. 2

VS

VS

OE

ESA    EZK    ES    EÖK    S

BM

FIG. 3

VS

VZ

VAK

VS

OP+OF

VFO

BM

OV

FIG. 4

FIG. 5

FIG. 6a

FIG. 6b

FIG. 7

FIG. 8

KR

VS          OP

10

7a

9

8

7

4

6

BM

3

5

2

1

VS

K

FIG. 9

FIG. 10

FIG. 12

(a)

(b)

(c)

(d)

FIG. 11

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6590999 B1
- DE 102007041893 A1
- DE 102008006709 A1
- WO 2004081875 A1

**In der Beschreibung aufgeführte Nicht-Patentliteratur**

- **RATHI, Y. ; VASWANI, N ; TANNENBAUM, A ; YEZZI, A.** Particle filtering for geometric active contours with application to tracking moving and deforming objects. *IEEE Computer Society Conference on Computer Vision and Pattern Recognition,* 2005, vol. 2
- **A. YILMAZ.** Object Tracking by Asymmetrie Kernel Mean Shift with Automatic Scale and Orientation Selection. *Proc. IEEE Conference on Computer Vision and Pattern Recognition,* Juni 2007, 1-6
- **W. LAO et al.** Automatic Video-Based Human Motion Analyzer for Consumer Surveillance System. *IEEE Transactions on Consumer Electronics,* Mai 2009, vol. 55 (2), 591-598
- **X. CHEN et al.** An Improved Mean Shift Algorithm for Moving Object Tracking. *Proc. 7th World Congress on Intelligent Control and Automation,* Juni 2008, 5111-5114
- **C. STAUFFER ; W. E. L. GRIMSON.** Adaptive background mixture models for real-time tracking. *Proc. IEEE Computer Society Conference on Computer Vision and Pattern Recognition,* 1999, vol. 2
- **P. W. POWER ; J. A. SCHOONEES.** Understanding background mixture models for foreground segmentation. *Proc. Image and Vision Computing,* 2002, 267-271
- **T. AACH ; A. KAUP ; R. MESTER.** Statistical model-based change detection in moving video. *Signal Processing,* 1993, vol. 31 (2), 165-180
- **T. AACH ; A. KAUP.** Bayesian algorithms for change detection in image sequences using Markov random fields. *Signal Processing: Image Communication,* 1995, vol. 7 (2), 147-160
- **F. PORIKLI ; O. TUZEL.** Human body tracking by adaptive background models and mean-shift analysis. *Proc. IEEE International Workshop on Performance Evaluation of Tracking and Surveillance,* 2003
- **A. ELGAMMAL ; D. HARWOOD ; L. DAVIS.** Non-parametric Model for Background Subtraction. *Proc. of the 6th European Conference on Computer Vision,* Juni 2000, 751-767
- **A. YILMAZ.** Object Tracking by Asymmetric Kernel Mean Shift with Automatic Scale and Orientation Selection. *Proc. IEEE Conference on Computer Vision and Pattern Recognition,* Juni 2007, 1-6
- **D. COMANICIU ; P MEER.** Mean Shift: A Robust Approach Toward Feature Space Analysis. *IEEE Transactions on Pattern Analysis and Machine Intelligence,* Mai 2002, vol. 24, 603-619